# EUROPÄISCHE PATENTSCHRIFT

(11) **EP 3 619 360 B1**
(45) Veröffentlichungstag und Bekanntmachung des Hinweises auf die Patenterteilung: **18.02.2026**
(21) Anmeldenummer: 18725771.2
(22) Anmeldetag: 03.05.2018
(51) Int. Cl.: E01C 11/22, E01C 3/06, E01F 5/00

(54) **ENTWÄSSERUNGSSYSTEM**
DRAINAGE SYSTEM
SYTÈME DE DRAINAGE

(30) Priorität: 06.05.2017 DE 202017002433 U; 18.11.2017 DE 202017005994 U
(43) Veröffentlichungstag der Anmeldung: 11.03.2020
(73) Patentinhaber: Kortmann, Karl, 48465 Schüttorf (DE)
(72) Erfinder: Kortmann, Karl, 48465 Schüttorf (DE)
(74) Vertreter: Bossmeyer, Jörg Peter
(86) Internationale Anmeldenummer: PCT/EP2018/061416
(87) Internationale Veröffentlichungsnummer: WO 2018/206411

(56) Entgegenhaltungen:
- DE-A1- 19 501 091
- DE-A1- 3 500 271
- DE-A1- 3 632 620
- DE-T5- 112009 003 630
- DE-U- 6 807 482
- DE-U1- 202012 101 154

## Beschreibung

Die Erfindung betrifft ein Entwässerungssystem nach dem Oberbegriff des Anspruchs 1. Insbesondere ist die Neuerung auf ein Entwässerungssystem mit einem Bausatz mit Betonformsteinen gerichtet, die insbesondere in den Randbereich einer variablen Nutzfläche eingebaut werden, so dass bei stabiler Begrenzung eine verbesserte Ableitung von Flüssigkeiten, insbesondere Wasser, erreicht werden kann.

Die effektive Ableitung von Oberflächenwasser stellt seit langem ein Problem bei der Erstellung von zumindest randseitige Stützstrukturen aus Betonformsteinen aufweisenden Nutzflächen dar. In DE 195 22 982 A1 wird dazu ein Bausatz vorgeschlagen, bei dem spezielle Ablauf-Formsteine eine seitliche Ableitung des Oberflächenwassers nur zu einer Versickerungsfläche hin gewährleisten. Im bodenseitig unteren Bereich der auf einem verfestigten Unterbau abgestützten Betonformsteine kann es jedoch - insbesondere im Bereich einer verfestigten Bettungsschicht - zu einer nicht sichtbaren Staunässe des Sickerwassers kommen, so dass sich die Betonformsteine durch Fahrbelastungen lockern. Auch in DE 20 2012 101 154 U1 wird ein spezieller Rinnenformstein vorgeschlagen, der seitlich neben einer offenporigen Deckschicht im Bereich der Asphaltfahrfläche angeordnet ist. Damit soll aus dieser Deckschicht heraus über die jeweiligen Fluidkanäle in den Betonformsteinen eine Ableitung von Oberflächenwasser erreicht werden. Auch hier besteht die Gefahr des "Aufschwimmens" der Betonformsteine auf dem Sickerwasser oberhalb der Bettungs- und Tragschicht des Unterbaus.

Bei einem Mehrschichtverbundstein gemäß DE 195 01 091 C2 soll die Abführung von Niederschlagswasser dadurch verbessert werden, dass dieser Verbundstein mit einer wasserundurchlässigen Vorsatzschicht versehen wird. Dabei ist vorgesehen, dass eine Wasserableitung über den Formverbund des Betonsteins erfolgen kann. In Einbaulage des Systems werden mittels Abstandsnocken breite Fugen gebildet, so dass in deren Bereich eine variable Wasserableitung erfolgen kann und nur ein Wasserfilm auf der Oberfläche der Mehrschichtverbundsteine vermieden wird. Ähnliche Systeme werden auch in DE 68 07 482 U, DE 35 00 271 A1, DE 36 32 620 A1 und DE 11 2009 003 630 T5 gezeigt.

Bei der normgerechten Anwendung der vorbeschriebenen Systeme auf Nutzflächen mit mehrschichtigem Unterbau und einer variablen oberen Nutzebene hat es sich jedoch gezeigt, dass - ausgehend von den Anforderungen an eine belastungsabhängige Herstellung des Unterbaus derartiger Bausätze - eine über die Nutzungsdauer zunehmende Verfestigung der Baustoffgemische im Bereich der Bettungs-und Tragschicht deren Entwässerungsmöglichkeiten zunehmend einschränkt. Es wurde festgestellt, dass langzeitige Pressung durch wechselnde Fahrbelastungen im Bereich des Unterbaumaterials zu einer Zone mit Wasserstau führt. Bei Nässe kommt es damit zu "aufschwimmenden" Pflaster- und Randsteinen, so dass diese aus ihrer Verbundlage gelöst und gelockert werden. Damit entstehen insbesondere auf großen Parkplätzen mit Betonpflaster oder im Randbereich von Straßenfahrflächen mit Begrenzungselementen bereichsweise Lockerungszonen, da hier im Bereich des Unterbaus eine Versickerung von Wasser nicht mehr oder nur mit langer Verzögerung möglich ist. Das hat zur Folge, dass aufwändige Nacharbeiten und Reparaturanforderungen von den Baufirmen zu erfüllen sind.

Bei einem gemäß DIN 18318 regelkonformen Herstellen und Verlegen von Pflasterdecken o. dgl. Systemen mit Randeinfassungen sind jeweilige Rand- und/oder Rinnensteine auf einem noch verarbeitbaren, nicht ausgehärteten Fundamentbeton zu verlegen. Dabei muss die Druckfestigkeit nach der erdfeuchten Verarbeitung im ausgehärteten Zustand den Mindestwert von 15,0 N/mm² erreichen. Bei derartigem wasserundurchlässigem Aufbau von Stützstrukturen am Randbereich von Fahrflächen können zusätzliche Einbaufehler auftreten, die ebenfalls eine aufwendige Nachbearbeitung erfordern.

Die Erfindung ist darauf gerichtet, im Bereich weitgehend variabler Nutzflächen mit Betonelementen die vorbeschriebenen Nachteile bei der Ableitung von Oberflächen-und Sickerwasser zu beheben sowie das Entwässerungssystem gegen Überbelastungen durch Fahrbetrieb und denkbare Verschiebungen von Bauteilen zu sichern. Die Lösung des Problems ergibt sich aus dem Anspruch 1 sowie den Unteransprüchen 2 bis 13.

Zur Lösung dieser Aufgabe wird ein Entwässerungssystem mit einem optimierbaren Bausatz mit Betonformsteinen vorgeschlagen, wobei diese in einer konzeptionell verbesserten Einbaulage auf den zur Installation vorzubereitenden Unterbau abgestimmt werden. Diese neue Wirkkombination ist darauf gerichtet, dass nunmehr im Bereich der Tragschicht und/oder der Bettungsschicht eine gezielte Anlagezone zu den Betonformsteinen hin definiert wird und damit eine permanente Wasserableitung im Bereich einer "integrierten Drainage" genutzt wird. Dabei ist vorgesehen, dass nunmehr die Betonelemente mit einer zumindest teilweise wasserdurchlässigen Struktur geformt sind und diese Betonformsteine dem Bereich der Bettungs-und/oder Tragschicht positionsgenau zugeordnet werden, derart, dass im Bereich der jeweiligen oberen Schichten des Unterbaus eine zusätzliche Entwässerung mit einer horizontalen Querableitung des Sickerwassers wirksam ist. Diese "gerichtete Drainage" ist permanent wirksam, da der Unterbau bei Fahrbelastungen zwar eine horizontale Verfestigung erfährt, gleichzeitig aber die vertikalen Anlagezonen des Unterbaus an den Betonformsteinen unbeeinflusst sind und die horizontale Querableitung des Sickerwassers langzeitig gewährleistet ist. Im Bereich der Anlagezonen bleibt die Porösität der wasserdurchlässigen Struktur langzeitig erhalten, so dass Wasser von der jeweils angrenzenden Schicht des Unterbaus horizontal eindringen kann und die Drainage des Systems gewährleistet ist. Wasserdurchlässiger Beton wird z.B. auch als Dränbeton oder Drainbeton bezeichnet. Beispielsweise ist ein wasserdurchlässiger Beton ein haufwerksporiger Beton.

Mit diesem System wird erreicht, dass bisher auftretende Nachteile im Bereich von "stehendem Wasser" vermieden werden und die sich entsprechend der Anzahl von Last-Überfahrten zunehmende Verfestigung im Bereich der zwischen Bettungsschicht und Tragschicht bestehenden Grenzzone des Unterbaus nicht mehr zu einem Wasser-Stau führen kann. Das aus der Fahrfläche vertikal einsickernde Wasser kann nunmehr zielgerichtet auch bis zu einer Grenzzone gelangen und über eine im Wesentlichen horizontale Querableitung "zwangsgeführt" in die seitliche Anlagezone umgelenkt werden. Im Bereich der durch den funktionalen Bausatz "zwangsweise" bei deren Verarbeitung erzeugten Anlagezonen bleibt die Porösität der wasserdurchlässigen Struktur langzeitig offen und so erhalten, dass das Wasser von einer jeweils angrenzenden Schicht oder Lage des Unterbaus horizontal eindringen kann und damit die vertikale sowie horizontale Drainage des Systems gewährleistet ist.

Mit diesem System wird erreicht, dass bisher auftretende Nachteile im Bereich von "stehendem Wasser" vermieden werden und die sich entsprechend der Anzahl von Last-Überfahrten zunehmende Verfestigung im Bereich der zwischen Bettungsschicht und Tragschicht bestehenden Grenzzone des Unterbaus nicht mehr zu einem Wasser-Stau führen kann. Das aus der Fahrfläche vertikal einsickernde Wasser kann nunmehr zielgerichtet auch bis zu einer Grenzzone gelangen und über eine im Wesentlichen horizontale Querableitung "zwangsgeführt" in die seitliche Anlagezone umgelenkt werden.

Damit wird Niederschlags- und Tauwasser - unter der Deckschicht - zielgerichtet in eine weniger verdichtete Bodenzone, beispielsweise unterhalb oder randseitig der die Nutzfläche bildenden Deckschicht, sicher abgeleitet. Mit dieser zielgerichteten Entsorgung können beispielsweise 20 % bis 60 %, vorzugsweise bis 100 %, des Oberflächenwassers unmittelbar abgeleitet werden. Ein mit dem Bausatz des erfindungsgemäßen Entwässerungssystems zusammenwirkendes kommunales Entwässerungsnetz wird weniger belastet, mit den querableitenden Betonelementen versehene Nutzflächen ermöglichen geringer dimensionierbare Abwasserkanäle, und es wird eine Senkung der Gestehungskosten erreicht. Denkbar ist dabei, dass Systeme aufgebaut werden können, bei denen der Abflussbeiwert bis auf den Wert C=0,00 abgesenkt ist (DIN 1986-100; EN 12056-3). Dies entspricht dann einer 100 %-igen Versickerung des Wassers am Straßenrand.

Ein vorteilhafter Aufbau des Entwässerungssystems sieht vor, dass die für die erfinderische Kombination einsetzbaren Betonformsteine jeweils als für Wasser volldurchlässige Elemente mit Porenstruktur ausgeführt sein können. Ebenso ist vorgesehen, dass - entsprechend der Höhenlage der in Einbaulage positionsgenau zugeordneten Tragschicht bzw. der Bettungsschicht - nur jeweilige Teilbereiche der Betonformsteine mit einer wasserdurchlässigen Porenschicht versehen werden. Bei der Umsetzung des Bausatzes ist dann zu gewährleisten, dass der wasserdurchlässige Teilbereich unterhalb der Deckschicht an die wasserführende Zone angrenzt und damit die Permanent-Drainage mit horizontaler Querableitung und Querverteilung realisiert ist.

Es hat sich gezeigt, dass mit der gezielten Querableitung von versickerndem Wasser eine 20 bis 60%-ig verbesserte Wasserableitung erreicht werden kann. Durch diese langzeitig wirkende Drainage des Bausatzes wird gleichzeitig ein verbesserter Frostschutz - mit vermeidbarer Ausbildung von Winterrissen der Fahrfläche - erreicht. Mit dem neuen System wird eine Zwangsableitung oberhalb der jeweiligen Tragschichten des Unterbaus erreicht. Im Zusammenwirken dieser gemäß Straßenbau-Normen (z. B. RStO) aufzubauenden Standardschichten (z. B. gemäß TLGSoB) wird für die sich im Laufe der Fahrflächenbenutzung verfestigenden Bettungs- und Tragschichten eine optimale Abstützung der als Stabilisatoren vorgesehenen Betonelemente langzeitig gewährleistet. Dazu haben Messungen an Betonformsteinen des installierten Bausatzes des erfindungsgemäßen Entwässerungssystems gezeigt, dass bei fachgerechtem Einbau ein "Zusetzen" im Bereich der Anlagezone nicht auftritt und damit die funktionale Querableitung des Sickerwassers erhalten bleibt.

Eine Anwendung des Bausatzes des erfindungsgemäßen Entwässerungssystems ist auf eine Kombination der jeweiligen Schichtkomponenten des gesamten Unterbaus mit neuartigen Drainage-Bauelementen gerichtet, wobei jeweils optimal für den Bauausführenden vorbereitete Bauelemente eingesetzt werden. Die mit zumindest einer wasserdurch-lässigen Betonlage versehene Struktur weist dabei insbesondere Bord-, Rinnen-, Randkanten-, Rasengitter-, T- und/oder L-Steine als variabel profilierbare und dimensionierbare Einzelbauteile auf. Damit wird eine innovative wasserdurchlässige Stützstruktur mit modularem Aufbau für variable Einbauvarianten an Fahr- und Gehwegen geschaffen.

Erfindungsgemäß wird in diese optimierbare wasserdurchlässige Stützstruktur des Bausatzes nunmehr ein die vorbeschriebenen, nach jeweiligem Anwendungsfall variierenden Bauteile der oberen Decklage untergreifender, ebenfalls wasserdurchlässiger Fundamentfertigstein als neues multifunktionales Verlegeelement integriert.

Mit diesem Fertigstein-Fundament-Konzept wird - neben der auch hier effektiv vorgebbaren Wasserableitung - eine zusätzliche Schutzwirkung für das erfindungsgemäße Entwässerungssystem erreicht, da dieses nunmehr effektiv gegen Überbelastungen durch Fahrbetrieb und denkbare Verschiebungen von Bauteilen gesichert ist. Diese stabilisierende Wirkung beruht darauf, dass nunmehr im Bereich der mittels des zusätzlichen Fundamentfertigsteins örtlich exakt vorgegebenen Entwässerungsschichten jeweilige Radlasten o. dgl. Beanspruchungen des Bausatzes in vertikaler sowie horizontaler Richtung optimal verteilt werden. Damit kann für die Langzeitstabilität ein optimaler Bettungsdruck bzw. eine geringe Sohlpressung unter dem Fundamentfertigstein berechnet und für den Einbau vorgegeben werden. Daraus resultiert, dass bisher nachteilige Versetzungen innerhalb der horizontalen "Entwässerungslagen" des Bausatzes sicher vermieden sind.

Für die Realisierung einer Vielzahl von Systemvarianten ist vorgesehen, dass die jeweiligen, bei der Fertigung des Fundamentfertigsteins zu realisierenden Druckfestigkeiten vorzugsweise im Normbereich der Klassen C12/15, C16/20, C20/25 oder C25/30 liegen. Vorgesehen ist auch, dass die wasserdurchlässigen Bauteile aus Porenbeton bzw. haufwerkporigem Beton der Klasse C30/37 bis C50/60 gefertigt werden. Für spezielle Einsatzfälle sind auch Erzeugnisse geplant, die im Bereich der Klasse C55/67 bis C80/85 einsetzbar sind, wobei auch ein ultrahochfester Beton der Klasse C90/105 bis C100/115 betrachtet werden kann.

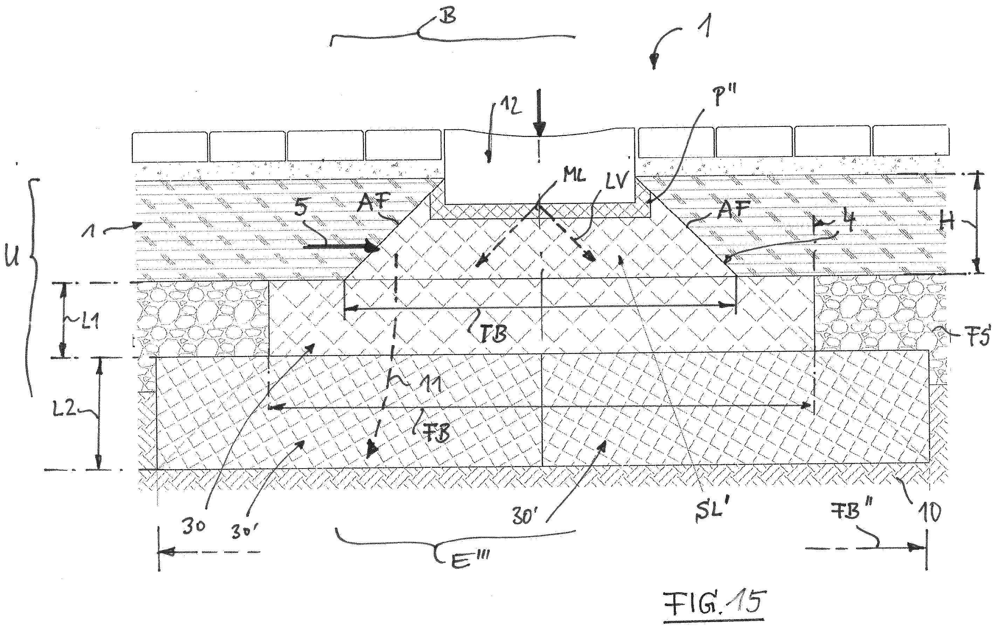

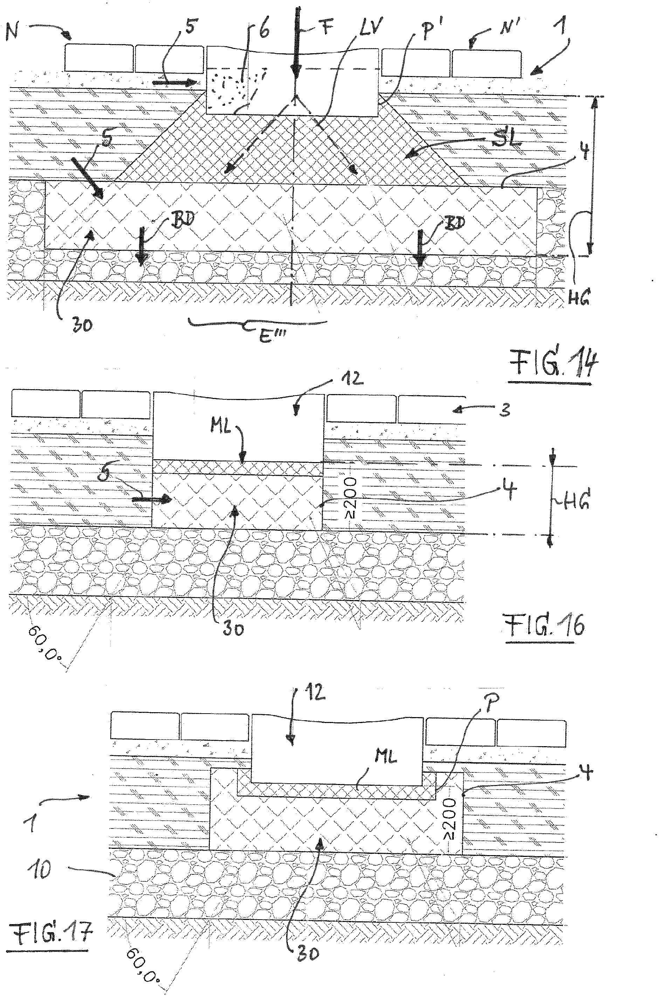

Bei der Herstellung der Fundamentfertigsteine mit zumindest bereichsweise wasserdurchlässiger Struktur werden die Sandbestandteile aus speziellen Sieblinien exakt zusammengeführt. Zur Verarbeitung sind Zuschläge hoher Festigkeit vorgesehen, und dabei werden spezielle Bindemittel mit langen Verarbeitungszeiten eingesetzt. Von besonderer Bedeutung sind die Bedingungen im Betonwerk, die für das Fertigteil eine Nachbehandlung vorsehen. Dabei erfolgt eine Einstellung auf erprobte Temperaturen im Mischturm und in der Produktionshalle. Auch das Klima in der Trockenkammer und in der Aushärtungshalle ist auf die konstanten Bedingungen im Betonwerk ausgerichtet. Bei einem Betonfertigteil werden vor der Auslieferung die gewünschten Eigenschaften wie Wasserdurchlässigkeit, Festigkeit usw. geprüft. Damit können zu jeder Betonmischung und jeder Art Formgebung optimale Werte realisiert werden, wobei diese Herstellungsrezepte und Abläufe reproduzierbar in der Steuer-EDV hinterlegbar sind. Insbesondere werden bei einem Betonfertigteil nach EN1340 (harmonisierte EU-Norm) für gefügedichte Rinnen und Einfassungen oder nach der EN 14991 (harmonisierte EU-Norm) für gefügedichte Gründungselemente/Fundamente oder teilweise außerhalb der Regelweise oder komplett außerhalb der Regelbauweise vor der Auslieferung die gewünschten Eigenschaften wie Wasserdurchlässigkeit, Festigkeit, Porenanzahl, Porengröße (siehe z.B. Fig. 14 und Fig. 15), Hohlraumgehalt, Widerstand Frost-Tau-Angriff, Frost-Tau-Salz-Angriff usw. entsprechend der erwarteten Verkehrsbelastung bzw. entsprechend der geplanten Einbautiefe (siehe z.B. Fig. 14 und Fig. 15) geprüft.

Die Erfindung betrifft, insbesondere somit, ein Entwässerungssystem aus einem Unterbau, einer Deckschicht und einem Bausatz mit Betonelementen, wobei der bodenseitig vorzubereitende Unterbau aus einer verfestigten Tragschicht sowie einer darüber befindlichen Bettungsschicht die eine obere Nutzfläche bildende Deckschicht trägt, die zumindest eine randseitige Stützstruktur aus den Betonelementen aufweist, wobei die Betonelemente zumindest im Bereich ihrer der Tragschicht und/oder der Bettungsschicht zugeordneten Anlagezone mit einer zumindest bereichsweise wasserdurchlässigen Drainage-Betonlage versehen sind, mit welcher der/den jeweiligen an der Drainage-Betonlage anliegenden Schicht oder Schichten des Unterbaus eine permanente Zwangsentwässerung mit horizontaler Querableitung unterhalb der Deckschicht vorgegeben oder vorgebbar ist. Erfindungsgemäß wird in die wasserdurchlässige Stützstruktur ein die Bauteile der oberen Decklage untergreifender wasserdurchlässiger Fundamentfertigstein als Verlegeelement integriert.

Vorteilhaft sind die Betonelemente vollständig aus einem offenporigen Material geformt.

Bevorzugt ist das mit den Betonelementen aufgebaute Entwässerungssystem auf die Ableitung von unter die Deckschicht gelangendem Sickerwasser gerichtet, insbesondere derart, dass das, insbesondere bisher auf der langzeitig verfestigten Bettungs- oder Tragschicht auflaufende, Sickerwasser mit der horizontalen Querableitung aus dem von der Stützstruktur wannenartig begrenzten Stützrahmen der Nutzfläche ausleitbar ist.

Der Bausatz ist vorzugsweise derart weitergebildet, dass die im Querschnitt mehrlagigen Betonelemente aus einem Grundmaterial und zumindest einem haufwerkporigen Betongemisch geformt sind und dieses als eine Drainage-Betonlage eine Grenzschicht im Bereich von vertikalen Anlagezonen an den Schichten des Unterbaus definiert.

Vorteilhaft ist im Bereich eines aus den Betonelementen gebildeten Stützrahmens als flächenbegrenzende Stützstruktur die horizontale Richtung der Querableitung von Sickerwasser vorgegeben.

Bevorzugt sind die die wasserdurchlässige Betonlage aus Porenbeton aufweisenden oder vollständig aus diesem geformten Betonelemente in ihren geometrischen Abmessungen an die jeweiligen Wechselbelastungen im Bereich von variabel konzipierten oder konzipierbaren Nutzflächen angepasst oder anpassbar, wobei die im Bereich des Stützrahmens installierten Betonelemente jeweilige Zusatzprofile aufweisen und/oder die Betonelemente mit einer ortsfesten Rückstütze zusammenwirken.

Vorzugsweise erfolgt die Entwässerung durch Querableitung aus der Tragschicht und/oder der Bettungsschicht in einen an den Stützrahmen des Systems angrenzenden bodenseitigen Aufnahmebereich, wobei die Querableitung des Wassers aus dem Bereich der Bettungsschicht zu einem in das Entwässerungssystem integrierten Ablaufelement o. dgl. oberflächigen Drainageteil hin erfolgt.

Der Bausatz ist vorteilhaft derart weitergebildet, dass die Betonelemente mit der zumindest einen wasserdurchlässigen Betonlage als ein Bordstein, ein Rinnenstein, ein Randkantenstein, ein Rasengitterstein, ein L-Stein o. dgl. profiliertes Bauteil ausgeführt oder ausführbar sind und mit diesen die Stützstruktur einen modular ausführbaren Bausatz bildet oder bilden.

Bevorzugt ist der mit dem Entwässerungssystem kombinierte Unterbau im Bereich der Tragschicht und/oder der Bettungsschicht mit einer geringer als die Ausführungsnorm verfestigten Belastungsklasse, vorzugsweise gemäß RStO, hergestellt oder herstellbar, insbesondere derart, dass die auf der mit dem Entwässerungssystem versehenen Nutzflächen später auftretende Belastungen eine definierte Nachverfestigung des Unterbaus bewirken.

Vorzugsweise ist der Unterbau im Bereich der Tragschicht und der Bettungsschicht mit einer Schotter-Feinsand-Kombination versehen, die im Zusammenwirken mit dem Entwässerungssystem eine optimale Filterstabilität im Drainagebereich bewirkt.

Vorteilhaft ist das, insbesondere damit, aufgebaute Entwässerungssystem mit den jeweiligen die profilierten Oberbauteile in Form von Bord-, Rand- oder Rinnensteinen untergreifenden wasserdurchlässigen Fundamentfertigsteinen versehen, insbesondere derart, dass damit jeweilige Fahrbelastungen o. dgl. Beanspruchungen durch eine gezielte Lastverteilung aufnehmbar sind und mit, insbesondere optimiertem oder optimierbarem, Bettungsdruck in den Bereich des Unterbaus, insbesondere ohne oder weitgehend ohne Verfestigungswirkung auf diesen, eingeleitet wird oder werden oder einleitbar sind.

Der Bausatz ist bevorzugt derart weitergebildet, dass die Fundamentfertigsteine das jeweilige übergeordnete Bauteil zumindest bereichsweise einlagig untergreifen und dabei mit mehreren eine jeweilige wasserdurchlässige Horizontallage definierenden Fundamentfertigsteinen ein mehrlagiges Drainagesystem gebildet ist.

Vorzugsweise sind die Bauteile unmittelbar auf dem wasserableitenden Fundamentfertigstein aufgelegt oder auflegbar, wobei zumindest eine Nut-Feder-Profilierung zur Querkraftstabilisierung vorgesehen ist.

Der Bausatz ist vorteilhaft derart weitergebildet, dass die beiden Lagen der Fundamentfertigsteine unmittelbar aufeinanderliegen oder dass zwischen dem oberen Bauteil und dem zumindest einen Fundamentfertigstein eine zumindest bereichsweise wasserdurchlässige Stützverbindungslage vorgesehen ist.

Bevorzugt ist oder sind die Fundamentfertigsteine und/oder die Stützverbindungslage mit zumindest einer einen kraft- und/oder formschlüssigen Verbindungsaufbau für das zugeordnete Bauteil vorgebenden Profilierung versehen, insbesondere derart, dass für den baustellseitigen Montageablauf ein kontrollierbarer Verbindungszustand zwangsweise vorgegeben oder vorgebbar ist.

Der Bausatz ist vorzugsweise derart weitergebildet, dass die Stützverbindungslage zumindest bereichsweise als eine Klebeschicht oder Mörtellage ausgeführt ist oder die Stützverbindungslage aus wasserdurchlässigem Ortbeton geformt ist und dieser nur einen Teilbereich der Breite des Fundamentfertigsteins überdeckt, insbesondere derart, dass, vorzugsweise bei optimaler Lastverteilung, eine permanente Wasserableitung erhalten bleibt.

Vorteilhaft weist die Stützverbindungslage eine sich trapezförmig nach oben verjüngende Querschnittsprofilform mit jeweiligen Anlageflanken für die Tragschicht des Unterbaus auf.

Erläutert wird ferner ein Verfahren zur Herstellung und/oder Verwendung von Teilen des oder eines Bausatzes eines erfindungsgemäßen Entwässerungssystems, wobei die wasserdurchlässigen Fundamentfertigsteine ausgehend von einer Mindestbetonfestigkeit oder einer, vorzugsweise gemäß C 12/15, aufsteigenden Mindestbetonfestigkeit an die jeweiligen erforderlichen Endfestigkeiten angepasst werden, wozu während der Fertigung gleichmäßig exakte Sieblinien, Zuschläge oder ausgesuchte Zuschläge hoher Festigkeit, Bindemittel oder spezielle Bindemittel mit langer Verarbeitungszeit und/oder automatisch regelbare klimatische Bedingungen in sämtlichen Produktionsphasen eingesetzt werden.

Vorteilhaft wird in die Fundamentfertigsteine zumindest bereichsweise eine Bewehrung eingebracht.

Bevorzugt wird für einen langzeitstabilen Aufbau des Systems mit wasserdurchlässigen Fundamentfertigsteinen ein baustellenseitig einsetzbares Fertiggemisch z. B. als Sackware, lose Ware bzw. Big Bag Ware bereitgestellt, insbesondere derart, dass durch optimale Zugabe von Wasser oder Zugabe von Wasser und, insbesondere optimaler, Bindemittelsorte oder Bindemittelsorten eine Verarbeitung vor Ort durchgeführt und diese kontrolliert wird.

Vorteilhaft definiert die Konstruktion in Einbaulage eine, insbesondere funktionsrelevante, Höhe und eine, insbesondere entsprechende, Breite, vorzugsweise derart, dass entsprechend einer Prognose mit steigender Verkehrsbelastung, insbesondere langzeitig, vorzugsweise für mehr als 50 Jahre, Nachverdichtungen unter dem Fundament vermieden werden und damit eine bleibende Wasserdurchlässigkeit des Systems gewährleistet wird.

Anhand von Zeichnungen sind weitere Einzelheiten der Erfindung im Zusammenhang mit der Beschreibung nachfolgend erläutert. Dabei zeigen die Zeichnungen:
- Fig. 1: eine Perspektivdarstellung eines nicht beanspruchten Bausatzes mit Betonformsteinen mit einer Fahrbahn und angrenzendem Fußweg,
- Fig. 2: eine Schnittdarstellung des Systems gemäß Fig. 1,
- Fig. 3: eine Perspektivdarstellung eines nicht beanspruchten Bausatzes ähnlich Fig. 1 mit unterschiedlichen Gestaltungen der an die Fahrfläche angrenzenden Zone,
- Fig. 4 bis Fig. 6: jeweilige Schnittdarstellungen der Zonen in Fig. 3,
- Fig. 7: eine Perspektivdarstellung eines nicht beanspruchten Bausatzes ähnlich Fig. 3 mit einer Rigolen-Versickerung,
- Fig. 8: eine Schnittdarstellung des Systems gemäß Fig. 7,
- Fig. 9: eine Ausschnittsdarstellung einer Fahrfläche mit einem integrierten Ablaufelement in Schnittdarstellung eines nicht beanspruchten Bausatzes,
- Fig. 10 bis Fig. 12: jeweilige perspektivische Einzeldarstellungen von Betonformsteinen des Bausatzes für die Randabstützung im Bereich einer Nutzfläche,
- Fig. 13: eine Schnittdarstellung eines nicht beanspruchten, strukturierten Bausatzes im Bereich einer mehrgliedrigen Fahrstraße mit zentraler Fahrbahn sowie beidseitiger Abstellfläche und Gehweg
- Fig. 13a: eine DIN-Zusammenstellung der Einbausituation gemäß Fig. 13,
- Fig. 14: eine Schnittdarstellung ähnlich Fig. 2 mit einem zusätzlichen wasserdurchlässigen Fundamentfertigstein als neue Basiskomponente,
- Fig. 15 bis Fig. 21: jeweilige Anwendungen des Fundamentfertigsteins im Bereich einer Muldenrinne ohne Rückenstütze,
- Fig. 22 bis Fig. 24: jeweilige Einbaulagen des Fundamentfertigsteins im Bereich eines erhöhten Bordsteins,
- Fig. 25 und Fig. 26: eine jeweilige Entwässerungsrinne mit variierender Abstützung im Bereich des veränderten Fundamentfertigsteins,
- Fig. 27 bis Fig. 33: jeweilige Draufsichten und Schnittdarstellungen eines Bausatzes mit L-Formsteinen und mit diesen kombinierten Fundamentfertigsteinen,
- Fig. 34 bis Fig. 37: jeweilige Schnittdarstellungen im Bereich des wasserdurchlässigen Fundamentfertigsteins mit variablen Ausführungen von Bodeneinlässen, und
- Fig. 38: ein System ähnlich Fig. 31, wobei hier eine Muldenrinne im Bereich eines profilierten Unterbauteils querkraftstabil mittels Nut-Feder-Verbindung gehalten ist.

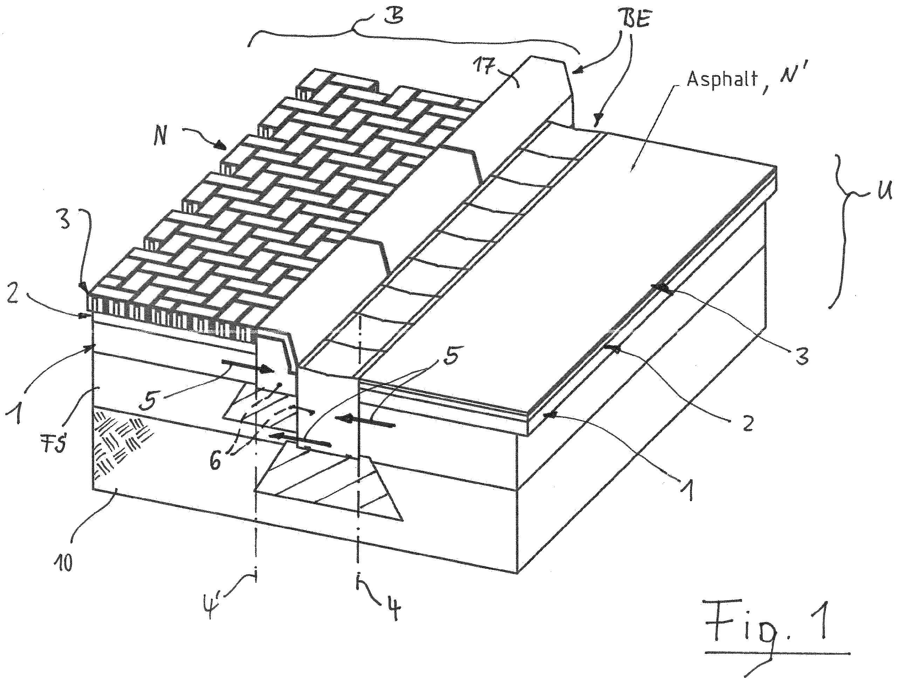

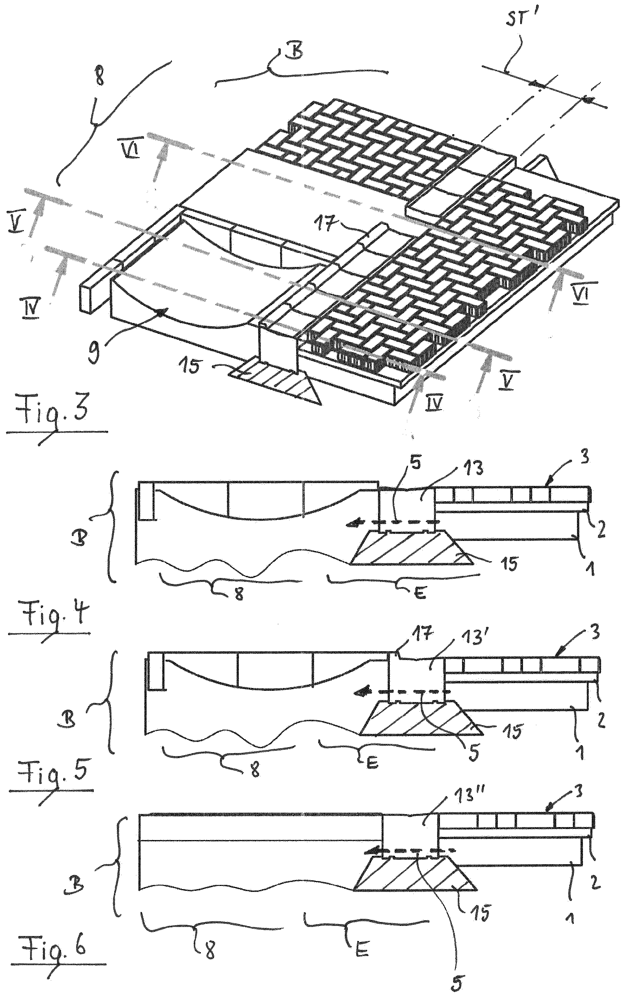

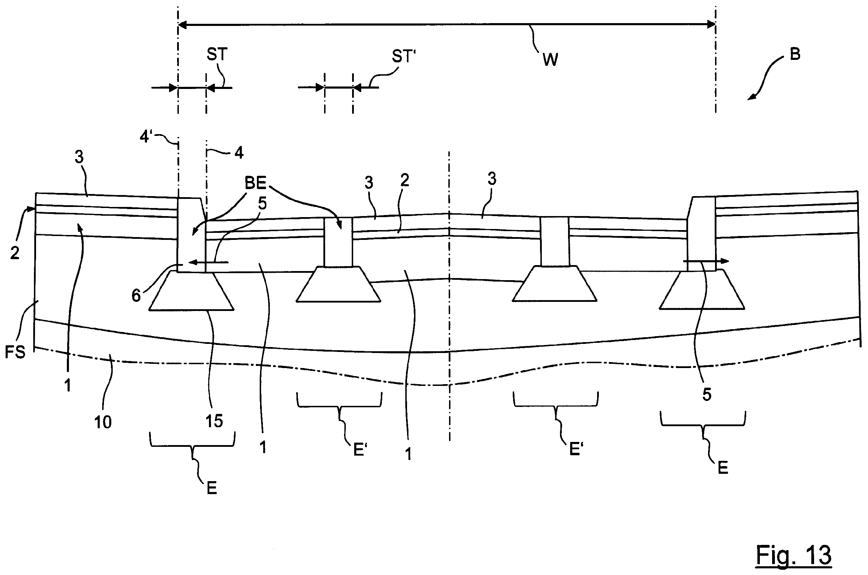

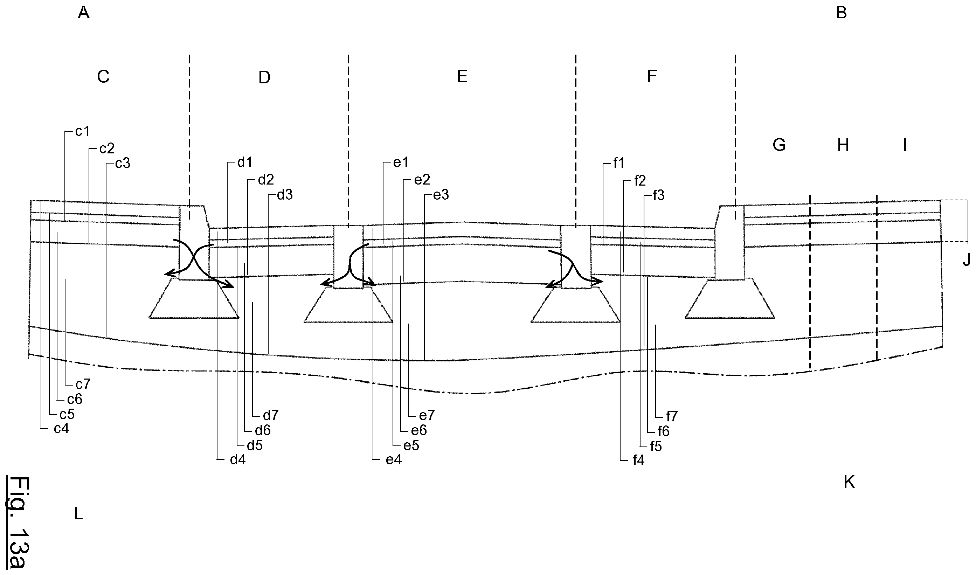

Die Darstellung gemäß Fig. 1 zeigt in einer perspektivischen Prinzipdarstellung einen an sich bekannten Bausatz B mit Betonformsteinen zur Herstellung unterschiedlicher Nutzflächen (Fig. 3, Fig. 13). Ein derartiger Bausatz B wird dabei im Bereich von Fahrstraßen, Gehwegen, Abstellflächen, Pflasterflächen o. dgl. so installiert, dass jeweilige Nutzflächen N, N' definiert sind.

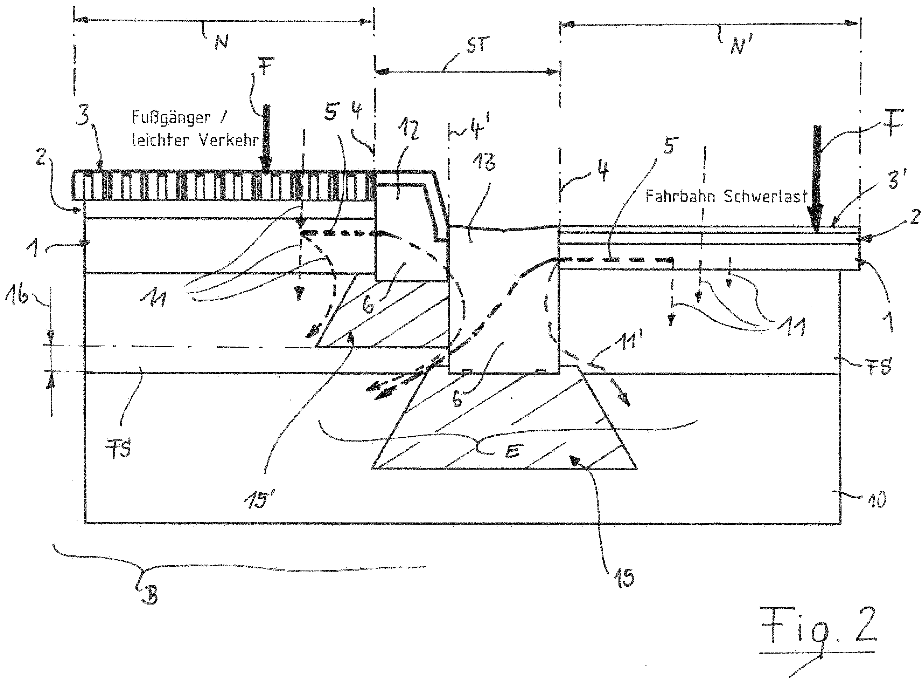

Dabei ist über dem gewachsenen Boden 10 ein bodenseitig vorzubereitender Unterbau U vorgesehen. Dieser Unterbau U besteht, insbesondere normgerecht, aus einer verfestigten Tragschicht 1 - hier z.B. mit einer als Frostschutz FS bezeichneten Frost-Schutz-Schicht (FSS) - und einer darüber befindlichen Bettungsschicht 2, die ihrerseits eine, vorzugsweise die jeweilige obere Nutzfläche N, N' bildende, Deckschicht 3 trägt. Bei diesen Basis-Konzepten des Straßenbaus ist vorgesehen, dass der Bausatz B zumindest eine randseitige Stützstruktur ST, ST' (Fig. 2, Fig. 13) mit den Betonelementen BE in Form von variabel geformten Betonformsteinen aufweisen kann.

Der in den Darstellungen gemäß Fig. 1 bis Fig. 13 in unterschiedlichen Anwendungsfällen veranschaulichte, nicht beanspruchte Bausatz mit Betonelementen BE ist so konzipiert, dass die zumindest eine damit gebildete Stützstruktur ST, ST' der jeweiligen Nutzfläche N, N' nunmehr als Teil eines funktionalen Entwässerungssystems ausgebildet ist. Damit ist ein bisher "verschlossener" Bereich zusätzlich als Drainagezone wirksam.

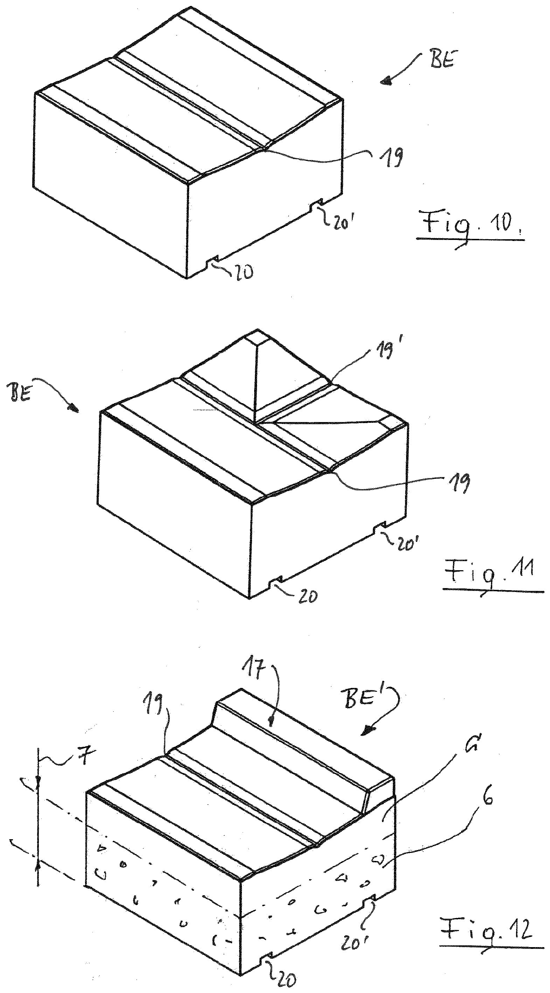

Die variabel ausführbaren Betonelemente BE definieren dabei zumindest im Bereich einer in Einbaulage der Tragschicht 1 und/oder der Bettungsschicht 2 zuzuordnenden Anlagezone 4 eine wasseraufnehmende und damit wasserdurchlässige Drainage-Betonlage 6 in einbautechnisch vorzugebender Nutzposition (Fig. 12). Damit wird erreicht, dass der jeweiligen an der Drainage-Betonlage 6 anliegenden Schicht - nämlich 1, 2 und/oder FS - des Unterbaus U eine Wasserführung mit horizontaler permanenter Querableitung 5 als "Zwangsentwässerung" vorgegeben ist. Aus Fig. 1 und Fig. 2 wird diese zusätzliche Querableitung 5 des Sickerwassers 11 im Bereich der als Randkantenstein 12 oder Rinnenstein 13 ausgebildeten Betonelemente verdeutlicht, so dass das variabel aufbaubare Entwässerungssystem E nachvollziehbar ist.

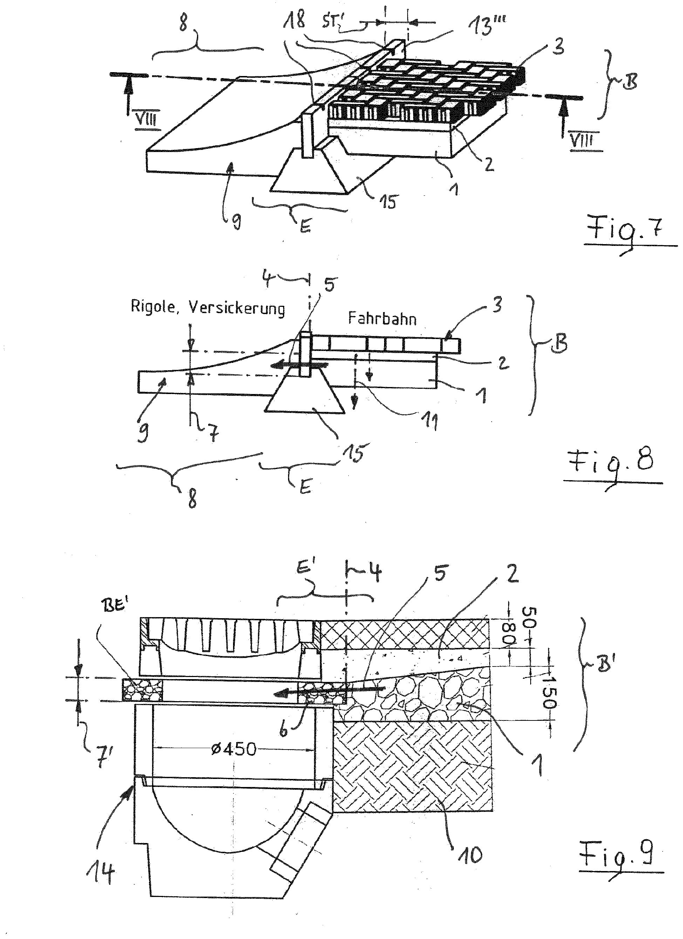

Eine zweckmäßige Ausführung sämtlicher der dargestellten Betonelemente BE (Fig. 1 bis Fig. 13) sieht vor, dass diese Teile vollständig aus einem offenporigen Material geformt sein können und damit das in Fig. 2 gezeigte funktionale Zusammenwirken von Unterbau U, Sickerwasser 11 und Querableitung 5 optimiert werden kann. Diese vollständige Offenporigkeit ist auch bei dem ringförmigen Betonelement BE' in Fig. 9 vorgesehen, so dass hier die Querableitung 5 in eine Schachtbaugruppe 14 möglich ist.

Es hat sich gezeigt, dass unter Berücksichtigung von im Benutzungsalltag auftretenden Belastungen F (Fig. 2) die zumindest bereichsweise wasserdurchlässigen Betonelemente BE - wie auch die aus Pflastersteinen bestehende Deckschicht 3 - mit der notwendigen Stabilität so geformt werden können, dass trotz einer "porösen" Struktur die auftretenden Bruchbelastungen und/oder Biege-Zug-Belastungen sicher aufnehmbar sind. Auch Sonderformen wie Betonelemente BE in Form von L-Steinen (ähnlich: Fig. 12) können mit dem haufwerkporigen Betongemisch so gefertigt werden, dass ungewollte Beschädigungen der Betonelemente BE vermieden sind und die Wasserdurchlässigkeit gewährleistet ist. Eine vorteilhafte Lösung wird auch dann erreicht, wenn die Betonelemente BE in Form von Rasengittersteinen gefertigt werden, die zumindest im unteren Bereich - die der Bettungsschicht 2 zugewandt ist - mit der wasserdurchlässigen Drainage-Zone für die Querableitung 5 zusammenwirken.

Aus den Querschnittsdarstellungen gemäß Fig. 2 und Fig. 4 bis 6 sind unterschiedliche Stützsysteme im Bereich der randseitigen Stützstrukturen ST, ST' dargestellt, wobei hier in jedem Falle die Stabilität für die im Bereich der Nutzflächen N, N' verbauten Deckschichten 3 (Pflastersteine, Asphalt) gewährleistet wird. Dabei ist vorgesehen, dass durch die Einbaubedingungen die Stabilität des jeweiligen Rahmen-Konzeptes gewährleistet ist. Dazu sind vorzugsweise variabel ausführbare Rückenstützen 15, 15' vorgesehen. In Fig. 2 wird dabei deutlich, dass in jedem Fall im Bereich der Anlagezone 4' eine als Auslassband 16 unterhalb der Rückenstütze 15' verbleibende Durchlasszone zur Zwangsentwässerung der Schwerlastfläche N' gebildet ist und damit ein sicher wirkendes Entwässerungssystem E aufgebaut wird.

Damit wird das Entwässerungssystem E so wirksam, dass ungewollte Ansammlungen von Sickerwasser 11 im Bereich der Tragschicht 1, der Bettungsschicht 2 sowie der als Frost-Schutz-Schicht aufgebauten Frostschicht FS zuverlässig vermieden werden.

Eine vorteilhafte Umsetzung des Konzeptes mit "Zwangsentwässerung" sieht vor, dass im Querschnitt mehrlagige Betonelemente BE' aus einem Grundmaterial G (Fig. 12) und zumindest einem haufwerkporigen Betongemisch geformt sein können. Dieses wasseraufnehmende und -führende Gemisch wird dann als eine variierbare Drainage-Betonlage 6 beim Formen des Betonelementes BE' in ihrer Höhe 7 optimal vorbereitet. Damit ermöglicht das Betonelement BE, BE' die in variablen Einbauhöhen EH (Fig. 2) positionierbaren Anlagezonen 4, 4' an den Schichten des Unterbaus U, so dass die Drainage-Betonlage 6 eine zur Querableitung 5 optimale Position aufweist. Dabei ist die Grenzschicht zwischen Drainage-Betonlage 6 und angrenzendem Splitt-Sand-Gemisch des Unterbaus weitgehend frei von Druckbelastungen, so dass die Wasserableitung langzeitig wirksam ist.

Für die praktische Realisierung des Entwässerungssystems E hat es sich gezeigt, dass die die wasserdurchlässige Betonlage 6 aus Porenbeton aufweisenden Betonelemente BE in ihren geometrischen Abmessungen (Länge, Breite, Höhe) an die jeweiligen Wechselbelastungen im Bereich von variabel konzipierbaren Nutzflächen N, N' fertigungstechnisch einfach anpassbar sind.

Damit wird erreicht, dass im Bereich eines aus den Betonelementen BE gebildeten Stützrahmens - als flächenbegrenzende Stützstruktur ST, ST' - die horizontale Richtung der Querableitung 5 von gestautem Wasser für variable Deckschichten optimal vorgegeben werden kann. Dabei ist insbesondere vorgesehen, dass die Entwässerung durch die Querableitung 5 aus der Tragschicht 1 und/oder der Bettungsschicht 2 in einen an den jeweiligen Stützrahmen ST, ST' des Systems angrenzenden bodenseitigen Aufnahmebereich 8 erfolgt. Dazu sind unterschiedliche Ausführungen von Aufnahmebereichen 8 aus den in Fig. 3 bis 8 ersichtlichen Prinzipdarstellungen zu entnehmen.

Dabei ist vorgesehen, dass die - auch zur Ableitung von Niederschlagswasser aus dem Bereich der jeweiligen Nutzflächen N, N' vorgesehenen - Ausführungen des jeweiligen Aufnahmebereiches 8 so konzipiert sind, dass die Querableitung 5 des Wassers aus dem Bereich der Tragschicht 1 und/oder der Bettungsschicht 2 zu einem in das Entwässerungssystem E integrierbaren Ablaufelement 9 o. dgl. Drainageteile hin erfolgt. Dabei ist das Entwässerungssystem E in den dargestellten Bausatz-Varianten auf die Ableitung von jeweils unter die Deckschicht 3 gelangendem Sickerwasser 11 gerichtet (Fig. 8). Es hat sich gezeigt, dass das bisher auf der langzeitig verfestigten Trag- bzw. Bettungsschicht 1, 2 auflaufende Sickerwasser 11 in jedem Fall (Fig. 3 bis Fig. 9) mit der horizontalen Querableitung 5 aus dem Stützrahmen ST, ST' der Stützkonstruktion ausleitbar ist und diese funktional mit den Ablaufelementen 9 (Rinne, Rigole, Versickerung) zusammenwirkt.

Dabei ist vorgesehen, dass die im Bereich des Stützrahmens ST, ST' installierten Betonelemente BE auch jeweilige Zusatzprofile 17 (Fig. 4: Randkante 17, Fig. 7: Quernuten 18) aufweisen können. Diese Betonelemente BE wirken mit einer ortsfesten Rückenstütze 15 zusammen, die ihrerseits an das Gesamtsystem anzupassen ist.

Aus der Gesamtansicht der Darstellungen in Fig. 1 bis 13 wird deutlich, dass die Betonelemente BE mit der zumindest einen wasserdurchlässigen Betonlage 6 als ein Bordstein, ein Rinnenstein, ein Randkantenstein, ein Rasengitterstein, ein L-Stein o. dgl. profiliertes Bauteil ausführbar sind. In Fig. 10 ist ein Rinnenstein mit Leitrinne 19 und unteren Nutprofilen 20, 20' dargestellt. Der Formstein gemäß Fig. 11 ist als ein T-Stück für eine verzweigte Muldenrinne 19' vorgesehen, und der Formstein gemäß Fig. 12 ist mit der als Schulter geformten Randkante 17 versehen.

Mit dieser Vielzahl von Elementen wird ein insgesamt modular ausführbarer Bausatz für die jeweilige Stützstruktur ST, ST' bereitgestellt, mit der variable Ausführungen von Gehwege, Abstellflächen und Fahrflächen aufweisenden Straßenprofilen (Fig. 13) optimal realisiert werden können. Diese kombinierten Straßenprofile gemäß Fig. 13 bilden dabei eine wannenartig durch die Stützprofile ST, ST' begrenzte Querschnittskontur (Breite W), in der dann mehrere Entwässerungssysteme E, E' wirksam sind.

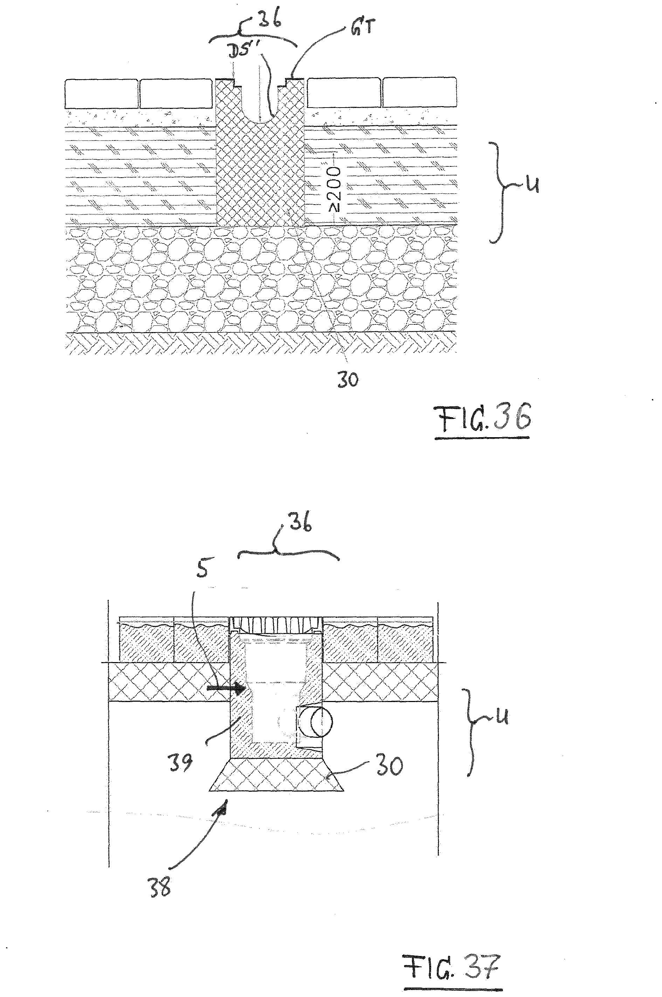

Aus der Darstellung gemäß Fig. 14 ist eine vorteilhafte Weiterentwicklung eines zweiten Entwässerungssystems E‴ dargestellt. Bei sämtlichen der nachfolgend (Fig. 15 bis Fig. 38) beschriebenen Varianten dieses Systems E‴ werden die Vorteile betreffend eine effiziente, gezielte Ableitung von Oberflächenwasser ebenfalls realisiert.

Das verbesserte Konzept ist darauf gerichtet, dass nunmehr die jeweiligen profilierten Bauteile in Form von Bord-, Rand- oder Rinnensteinen 12, 13 (Fig. 1) mit einem diese in Längsrichtung (entsprechend der Zeichnungsebene) untergreifenden Fundamentfertigstein 30, 30' zusammenwirken. Dieser Fundamentfertigstein 30, 30' ist - im Unterschied zum Basisteil 15 in Fig. 1 - auch aus einem zumindest bereichsweise wasserdurchlässigen Betongemisch hergestellt. Dabei sind jeweilige optimale Profilierungen der Fundamentfertigsteine 30, 30' (Schnittdarstellungen, insbesondere Fig. 15 bis Fig. 26, Fig. 28, Fig. 30 bis Fig. 38) denkbar.

Dieses sich am Randbereich zweier Nutzflächen N und N' erstreckende System ist so aufgebaut, dass mittels der aneinandergereihten Fundamentfertigsteine 30 die jeweiligen quer oder längs im Bereich des Bauteils 12 auftretenden Fahrbelastungen o. dgl. Beanspruchungen F durch eine effektive Lastverteilung LV so aufnehmbar sind, dass in dem gesamten Unterbau ein vorteilhaft geringer Bettungsdruck BD (bezogen auf die Auflagefläche der jeweilige Ausführung des eine Breite FB, FB" aufweisenden Fundamentfertigsteins 30) aufzunehmen ist.

Mit diesem System der Fundamentfertigsteine 30, 30' soll die bisher im Stand der Technik (DIN 1986-100; EN 12056-3) realisierte und im täglichen Fahrlastbetrieb sehr unsichere Stützkonstruktion verändert werden. Dabei ist vorgesehen, dass die für eine optimale Wasserableitung wenig geeignete Stützkonstruktion ST, ST' - mit der üblichen Anwendung von Vor-Ort-Beton als Rückenstütze o. dgl. - effizient so verbessert wird, dass die Langzeitstabilität am Straßenrand für mehr als 10 Jahre, vorzugsweise mehr als 50 Jahre, gewährleistet ist.

In der gemäß Fig. 3 dargestellten Ausführung wird deutlich, dass die Fundamentfertigsteine 30 hier die jeweilige Bauteilkombination in Längsrichtung einlagig untergreifen. Ebenso ist denkbar, dass das System mit mehreren, eine jeweilige Horizontallage L1, L2 definierenden Schichten aus Fundamentfertigsteinen 30, 30' aufgebaut wird (Fig. 15).

Die Gesamtschau der Darstellungen gemäß Fig. 14 und 15 macht deutlich, dass die Bauteile 12 bzw. eine Stützverbindungslage SL, SL' prinzipiell unmittelbar auf dem jeweiligen wasserdurchlässigen Fundamentfertigstein 30 auflegbar sind. Zusätzlich sind in Fig. 15 die beiden Lagen L1 und L2 der Fundamentfertigsteine 30, 30' unmittelbar aufeinanderliegend dargestellt, wobei hier die komplex aufgebaute Stützverbindungslage SL' deutlich wird.

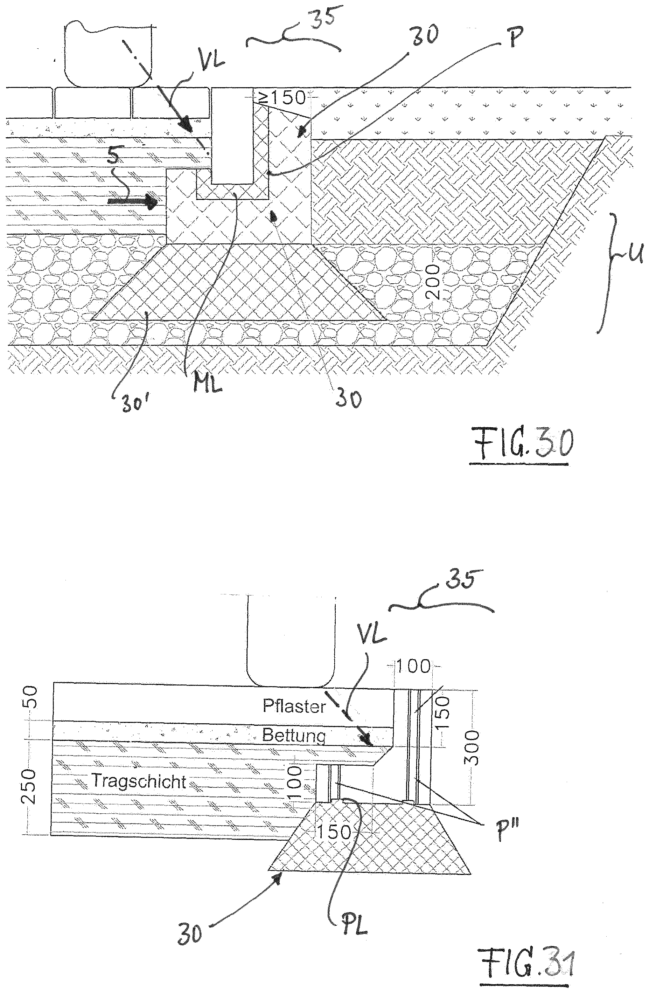

Eine optimale Konstruktion dieses verbesserten Bausatzes 1 mit dem Fundamentfertigstein 30 sieht vor, dass in dessen Bereich auch eine einen formschlüssigen Verbindungsaufbau für die zugeordneten und kombinierten Bauteile 12, 13 vorgebende Profilierung P, P', P", NF vorgesehen sein kann (Fig. 30 bis Fig. 38). Diese Profilierungen P bzw. Nut-Feder-Verbinder NF sind insbesondere in Fig. 17, Fig. 23 bis Fig. 26, Fig. 28 und Fig. 30 bis Fig. 38 in variierenden Ausführungen angedeutet.

Die Erhöhungen bzw. Profilierungen P sind bereits abschnittsweise (in Teilstrecken) von Vorteil. Damit wird mit geringem Aufwand eine Querkraftstabilisierung in das System integriert. Zwischen den Fertigteilfundamenten, zwischen den Rinnensteinen oder zwischen den Borden sind auch Nut-Feder-Verbindungen (nicht gezeigt) möglich.

Eine weitere Verbesserung sieht vor, dass zwischen den als bekannte "Standard-Serien-Teile" ausgebildeten Bauteilen 12, 13 des Stützsystems ST und dem zumindest einen Fundamentfertigstein 30, 30' die wasserdurchlässige Stützverbindungslage SL in Form einer C12/15-Betonlage geformt wird. Diese Stützverbindungslage SL kann dabei vorteilhaft auch als eine zumindest punktuell zwischengeordnete Klebeschicht ausgeführt sein (nicht dargestellt).

Eine Erweiterung des Konzepts gemäß Fig. 14 ist in Fig. 15 gezeigt, wobei hier die Stützverbindungslage SL aus einer wasserdurchlässigen Ortbeton-Lage geformt ist. Dieser Aufbau des Ortbetons ist so geformt, dass nur ein Teilbereich TB einer größeren Breite FB des Fundamentsystems mit den Fertigsteinen 30 bzw. 30' überdeckt wird. Dabei wird in Fig. 14 deutlich, dass in diesem Bereich durch entsprechende Dimensionierung sowohl einer variablen Höhe H als auch einer variablen Breite FB die jeweiligen Richtungen im Bereich von - mit Pfeilen angedeuteten - Lastverteilungen LV vorbestimmbar sind und auf ein optimales Winkelmaß W eingestellt werden können. Damit kann der Bettungsdruck BD berechnet werden, dass die Beanspruchungen F weitgehend ohne Verfestigungswirkung in den Unterbau U eingeleitet werden und so die Wasserdurchlässigkeit langzeitig erhalten bleibt. Der geplante Bettungsdruck BD im Unterbau an den Tiefpunkten unter Rinnen und Borden sollte niedriger gewählt werden als der Bettungsdruck im Hauptfahrbereich. In Betonfertigteilen gibt es keine Nachverdichtung durch Verkehrsbelastung.

In der dargestellten Ausführung weist die Stützverbindungslage SL eine sich trapezförmig nach oben verjüngende Profilform mit jeweiligen Anlageflanken AF auf.

Ausgehend von diesem Grundkonzept (Fig. 1, Fig. 2; Fig. 14, Fig. 15) des Einbaus von zumindest bereichsweise wasserdurchlässig ausführbaren Fundamentfertigsteinen 30, 30' sind in den folgenden Ausführungsbeispielen gemäß Fig. 16 bis Fig. 38 weitere Anwendungen beschrieben. Diese gehen von den Einbauvorschriften gemäß DIN 18318 aus und bewirken eine signifikante Verbesserung. Die in den DIN- bzw. EN-Vorschriften gezeigten Entwässerungsrinnen, Randeinfassungen, Pflasterdecken, Borde usw. können insgesamt in variierenden Lagen mit dem erfindungsgemäßen Fundamentfertigstein 30, 30' kombiniert werden, so dass nunmehr in Abweichung zu DIN 18318
- auch die Rinnen und Borde teilweise oder komplett wasserdurchlässig sind,
- aus den Fundamentfertigsteinen gebildete Lagen wasserdurchlässig sind und/oder
- die örtlich erstellten Fundamente oder Fundamentstreifen in Form von Mörtel-Anpassungen (ML) wasserdurchlässig sind.

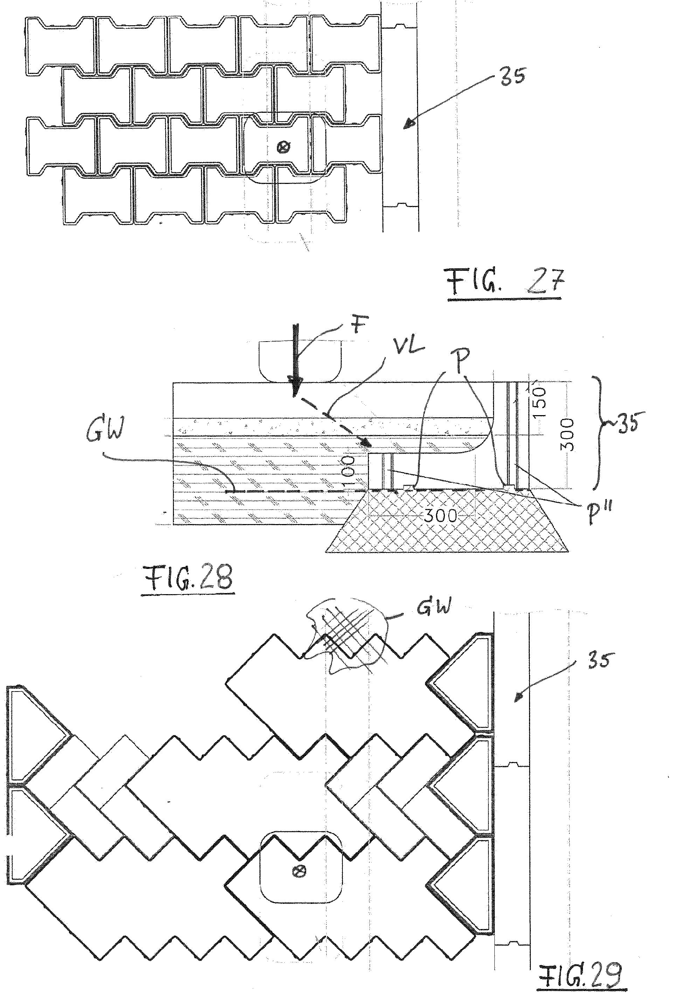

In den Ansichten gemäß Fig. 27 bis 29 ist das System mit einer Gewebelage GW kombiniert, die den Randstein als zusätzliche Stützfläche untergreift. Die Gewebelage kann teilweise am Fertigteil angeklebt zur Baustelle transportiert und hier in die dargestellte Untergriff-Lage ausgelegt werden.

Damit kann von den Fahrflächen N, N' eindringendes Wasser 5 vorteilhaft schnell in tiefere Schichten des Unterbaus U abgeleitet werden. Dabei ist vorgesehen, dass die sichtbaren Oberseiten der jeweiligen Bauteile 12, 13 (gemäß Herstellungsstandards) auch gefügedicht ausgeführt sein können. Damit werden schädliche Einflüsse auf das Gesamtsystem in Form von Abrieb, Verschmutzung, Frostansatz und Witterung reduziert. Mit zunehmender Tiefe einer jeweiligen Einbaulage der wasserdurchlässigen Komponenten kann deren für die Wasseraufnahme relevante Porengröße wieder ansteigen, da ein Eintrag von Feinsandteilen vermieden ist.

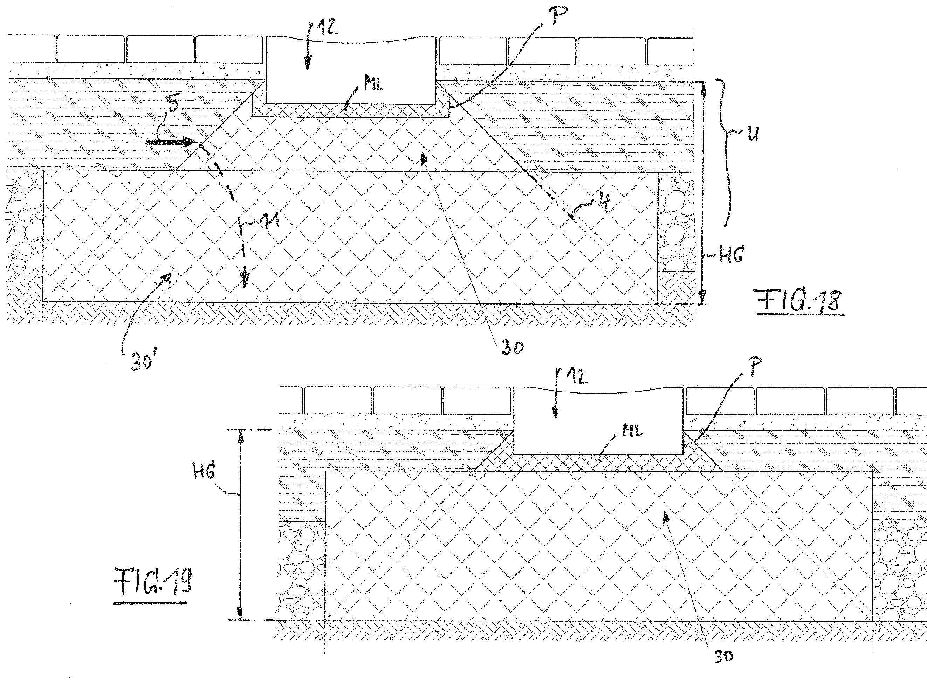

Ausgehend von den vorstehend erörterten und bereits mit entsprechenden Kurzzeichen versehenen Details (die nachfolgend nicht sämtlich wiederholt eingetragen werden) im Bereich des Fundamentfertigsteins 30, 30' gemäß Fig. 14 und 15 zeigen die Darstellungen in Fig. 16 bis 21 weitere Varianten der Bauteile bzw. Varianten des Einbaus vor Ort. In Fig. 16 wird dabei eine das obere Bauteil 12 untergreifende Mörtellage ML deutlich. Unter dieser vor Ort zu realisierenden Mörtellage ML - die auch in Fig. 17 bis 19 vorgesehen ist - ist der jeweilige Fundamentfertigstein 30 vorgesehen. Dieser ist in den Ausführungen gemäß Fig. 17 und 18 mit einer hier "wannenartig" dargestellten Profilierung P versehen. Für den vor Ort einzubringenden Mörtel ML wird eine definierte Einbaulage als "Zwangsposition" vorgegeben, so dass damit die Qualität dieses Systems optimiert werden kann, da der Einbau weitgehend unabhängig von der Qualifikation der Montageperson auch kontrolliert werden kann.

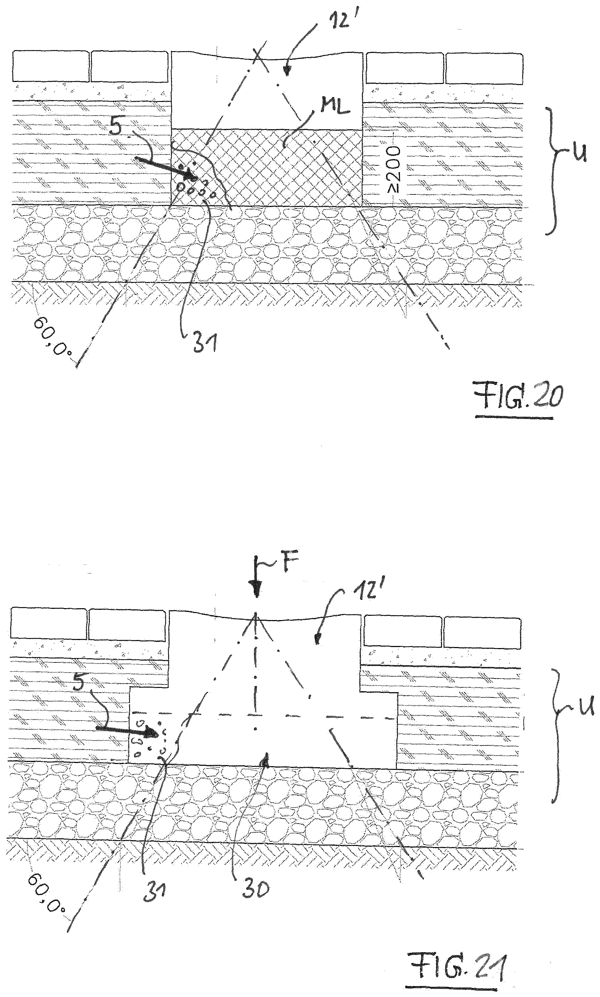

In Fig. 20 und 21 sind nicht beanspruchte Varianten dargestellt, bei denen die Wasserdurchlässigkeit in den unteren Bereich einer Vor-Ort-Lage (Fig. 9) bzw. in einem einstückigen Bauteil 12' mit jeweiligen Porenstrukturen 31 angedeutet ist.

Für eine Optimierung der Montagesituation ist vorgesehen, dass gleichzeitig mit den jeweiligen Fundamentfertigsteinen 30, 30' unterschiedlicher Profilierung (Fig. 14, Fig. 15, Fig. 23 bis 38) ein vorbereitetes "Montagehilfsmittel" in Form eines als Sackware vorbereiteten Fertiggemisches geliefert wird. Dieses ist entsprechend der konzipierten Betonfestigkeit (C12/15, C30/37 ... bis C100/115) so vorbereitet, dass durch eine vor Ort erfolgende Zugabe von Wasser oder Zugabe von Wasser und optimaler Bindemittelsorte ein fehlerfreier Einbau der wasserdurchlässigen Komponenten durchführbar ist und diese Einbausituation effektiv kontrolliert werden kann.

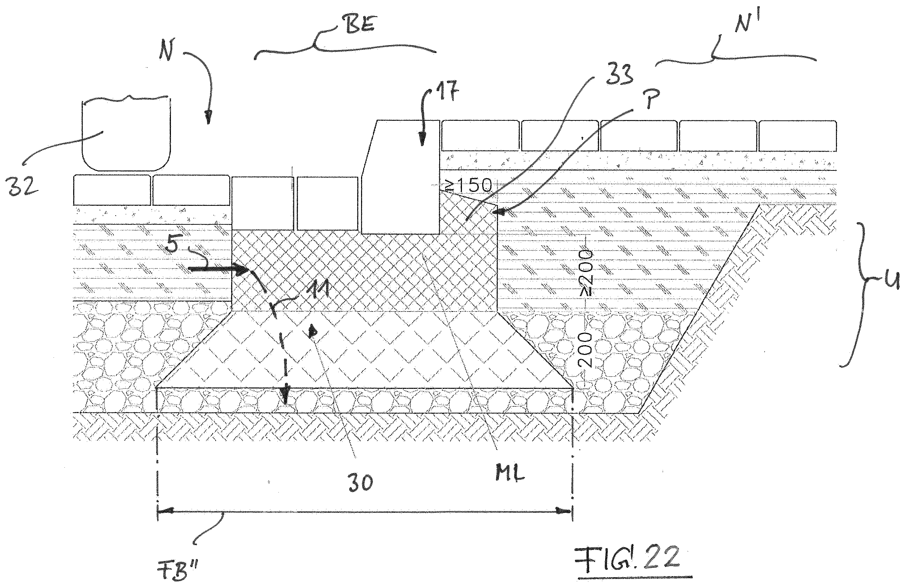

Bei den Ausführungsbeispielen gemäß Fig. 22 bis 24 sind jeweilige als Bordstein 17 ausgeführte Bauelemente BE mit dem wasserdurchlässigen System kombiniert.

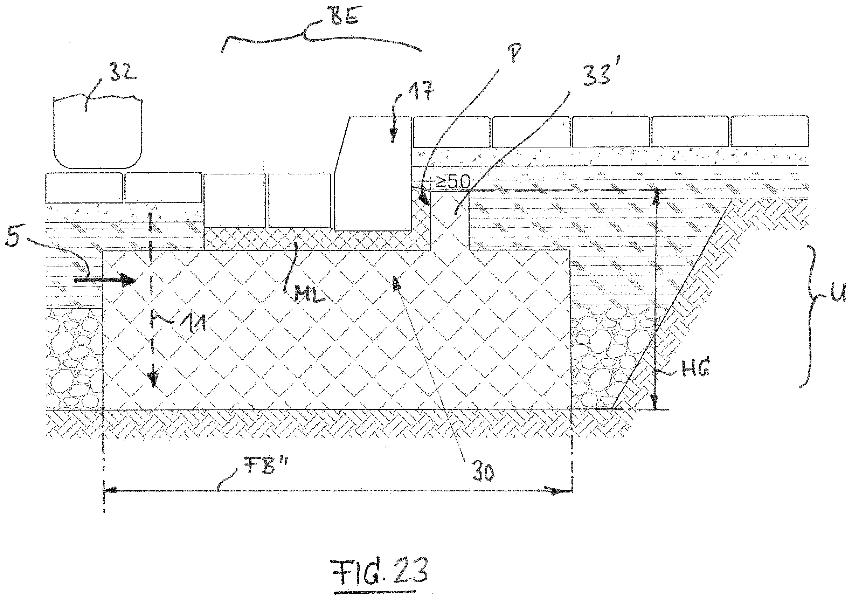

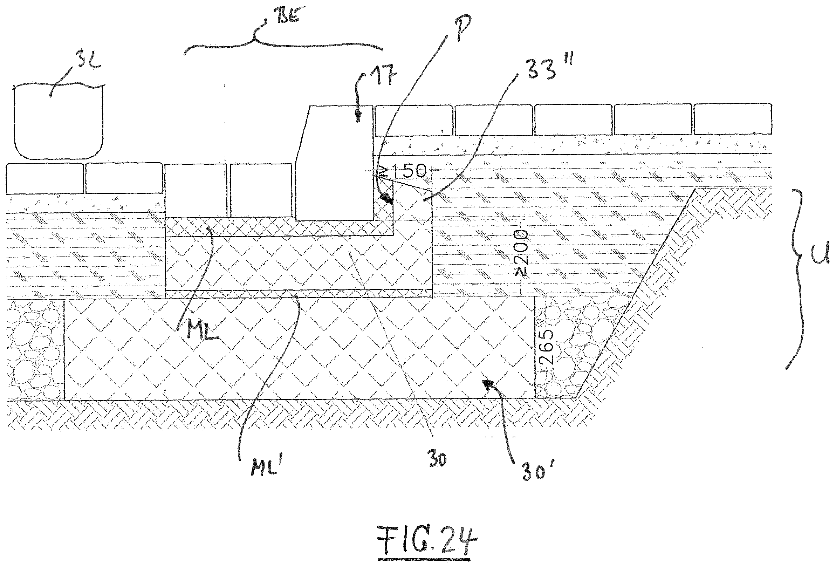

Fig. 22 zeigt dabei, dass im Bereich der mit einem Rad 32 verdeutlichen Fahrfläche N eine randseitig zur Nutzfläche N' gerichtete Rinne aufgebaut wird, unter der sich die "Mörtellage ML" aus einem vor Ort verarbeiteten Fertigbeton mit einer Profilierung P in Form einer Rückenstütze 33 befinden kann. Der darunter - in die als Frost-Schutz-Schicht ausgebildete Frostschicht FS - eingebaute Fundamentfertigstein 30 weist eine Kontur mit trapezförmigem Querschnitt auf. Bei der Ausführung gemäß Fig. 23 ist der Fundamentfertigstein 30 seinerseits mit der Rückenstütze 33' versehen, in deren Bereich der Bordstein 17 durch die "dünnere" Mörtellage ML vor Ort positionsgenau platziert wird. In Fig. 24 ist der die Rückstütze 33" als Anlagehaken aufweisende Fundamentfertigstein 30 mit zwei Mörtellagen ML und ML' und einem zweiten Stein 30' kombiniert.

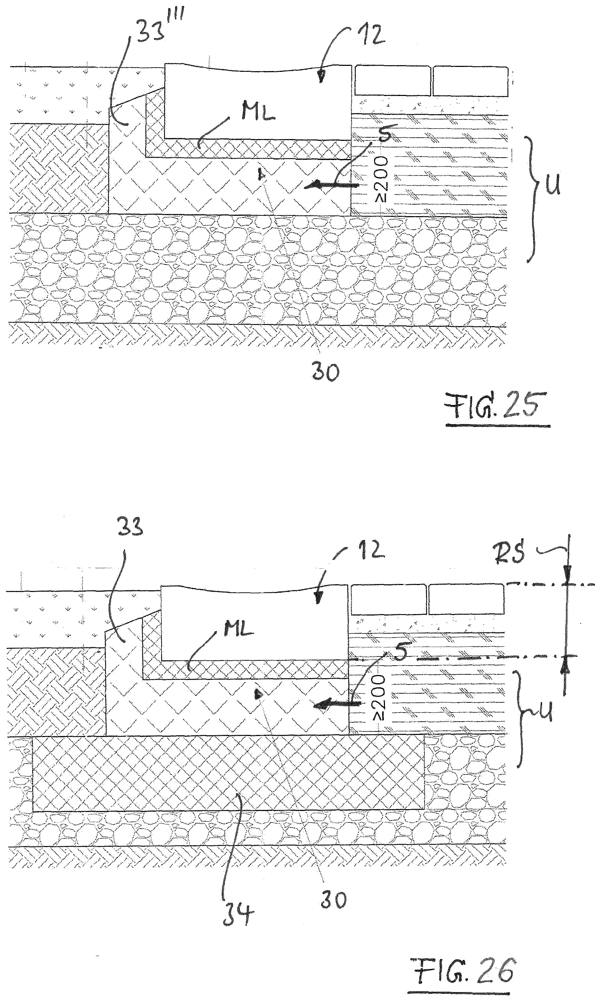

Eine ähnliche Konstruktion zeigen die jeweiligen Ausführungen in Fig. 25 und 26, wobei hier der Fundamentfertigstein 30 mit Rückenstütze 33‴ (ähnlich Fig. 24) versehen ist. In Fig. 25 ist die Ausführung der Rückenstütze 33‴ am Fundamentfertigstein 30 verändert, und in Fig. 26 wird in die als Frost-Schutz-Schicht definierbare Frostschicht des Systems eine zusätzliche Betonlage 34 zur Abstützung des Fundamentfertigsteins 30 eingebaut.

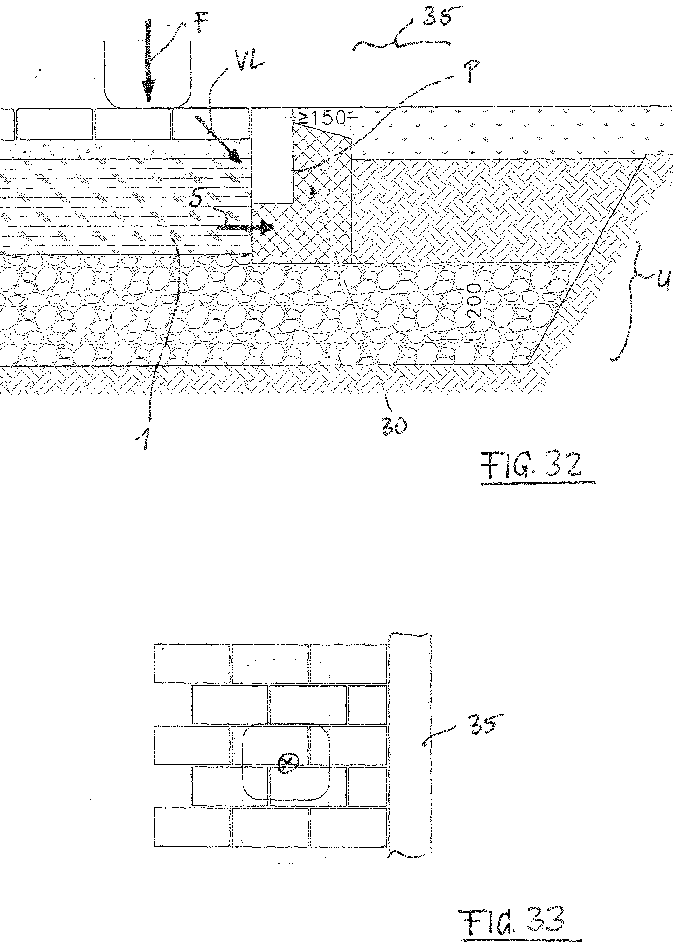

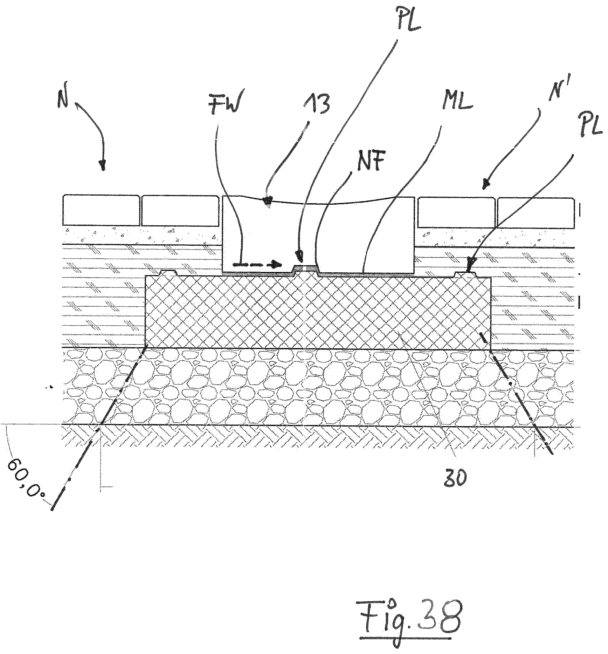

Aus den Darstellungen gemäß Fig. 27 bis 33 ergeben sich weiter konstruktive Merkmale, die insbesondere auf die Aufnahme der Fahrbelastung gemäß Pfeil F auf eine jeweilige L-Rückenstütze 35 gerichtet sind. Diese Rückenstütze 35 kann dabei gleichebenig mit der oberen Pflasterebene 3 verlaufen oder in einer gedeckten Einbaulage (Fig. 30, Fig. 32) verbaut werden. In Fig. 27, 29 und 33 sind unterschiedliche Anbindungen des Systems im Bereich der oberen Pflasterung 3 dargestellt. In vorteilhafter Ausführung ist die wasserdurchlässige Bodenstruktur 30 mit jeweiligen Profilen PL versehen (Fig. 31), so dass aus der Druckbelastung gemäß Pfeil F resultierende Lastverteilungen LV mit horizontaler Wirkrichtung verschiebefrei in das System abgeleitet werden können. Bei einer Ausführung gemäß Fig. 38 ist unterhalb einer Muldenrinne 13' eine Kraftwirkung mit einem Pfeil FW angedeutet. Diese horizontale Komponente kann im Bereich einer als Nut-Feder-Verbindung NF ausgeführten Stützstruktur verschiebesicher aufgenommen werden.

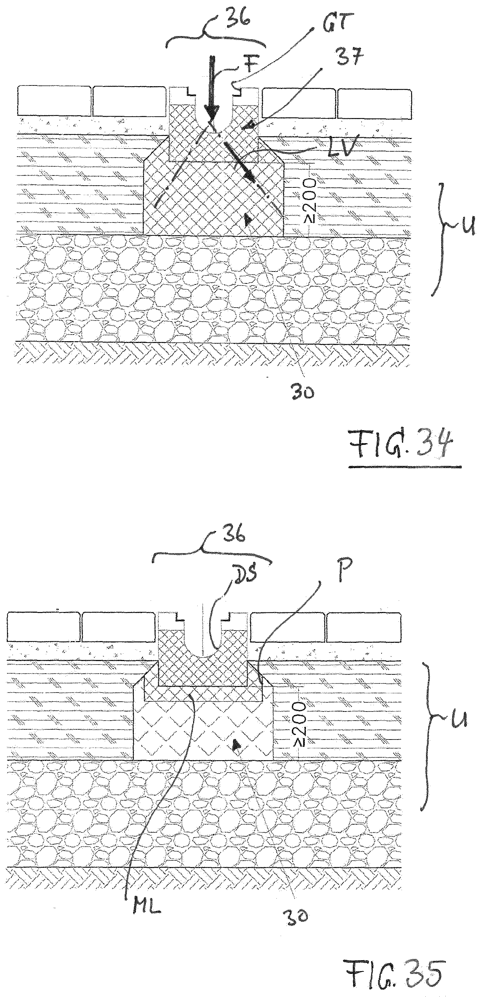

In Fig. 34 bis 37 sind weitere Anwendungen von Bodeneinläufen 36 dargestellt, wobei diese ebenfalls mit dem Fundamentfertigsteine 30 aufweisenden wasserdurch-lässigen System kombiniert werden. Dabei sieht das Konzept vor, dass der vorbeschriebene Lastabtrag LV auch im Bereich der Rinnenformteile 37 möglich ist. Dabei ist insbesondere denkbar, dass im Bereich eines Straßenablaufs 38 ebenfalls eine wasserdurchlässige Wandstruktur 38 realisiert werden kann. Mit GT ist der Einsatz eines Gußteils im Verbund mit dem Bodeneinlauf 36 gezeigt. Denkbar ist dabei, dass die Einläufe 36 im inneren Bereich bei DS mit einer wasserdichten Schicht versehen sind. Diese kann auch wassersaugend DS' ausgeführt sein, wobei das Gefüge die Schmutzaufnahme verhindert und nur Wasser aus der Rinne, aus dem Oberbau oder aus Rinne und Oberbau in die tieferen Schichten abgeleitet wird.

Aus Gründen einer optimalen Lastverteilung und unbeeinflusster Wasserableitung ist vorgesehen, die eine handelsübliche Höhe von 10 cm, 12 cm oder 14 cm aufweisenden Rinnensteine mit Höhenmaßen von mehr als 20 cm, vorzugsweise 27 cm und mehr, auszuformen.

Das Gesamtkonzept des vorbeschriebenen Bausatzes sieht vor, dass im Bereich bzw. unmittelbar auf den Fundamentfertigsteinen 30, 30' und den diesen zugeordneten Stütz- und Verbindungsbauten keine Nachverdichtungen durch Verkehrsbelastungen F möglich sind und damit das "verschiebefreie" System langzeitig stabil und wasserdurchlässig bleibt. Dabei ist vorgesehen, dass die Abmessungen, nämlich die Gesamthöhe HG und die Breite FB" des Einzelteil-Systems sowie die jeweilige Breite des Fundamentes so berechnet werden, dass die Bettung unterhalb des Fundamentes nicht nachverdichtet wird und auch nach 50 Jahren Fahrbelastung die Wasserdurchlässigkeit noch nachweisbar ist.

### Zu Fig. 13a)

A) Entsprechend RStO 12
   Entsprechend DIN 18318
B) ZTV Wegebau,
   nicht Flächen des Straßenverkehrs
C) Geh, /Radweg
   Bk0,3
D) Fahrbahn
   Bk1,8
E) Fahrbahn
   Bk3,2
F) Abstellfläche
   Bk1,0
G) Nutzungskategorie N 1
   (X) 27 bis 45 cm 80 MN/m²
   Geh,-Radweg, Terasse,
   Gartenwege
H) Nutzungskategorie N 2
   (X) 30 bis 65 cm 100 MN/m²
   befahrb. bis 3,5 to
   Gesamtgew., Garagenzufahahrt
I) Nutzungskategorie N 3
   (X) 32 bis 65 cm 100 MN/m²
   gelegentl. Begfahrung mit bis
   5,0 to Radlast, Rettungswege,
   Feuerwehrzufahrt
J) (X) min. Dicke
   frostsicherer Oberbau
K) XX MN/m² entspricht
   Ev2 Verformungsmodul
L) je tiefer eine Schicht liegt, desto geringer ist das erforderliche
   Verformungsmodul Ev₂
   je weniger Verkehrsbelastung anfällt, desto geringer ist das erforderliche Verformungsmodul Ev₂
   je geringer das Verformungsmodul, desto poröser und wasserdurchlässiger kann eine Schicht sein.
   Ev₂ steigt bei unmittelbarer Nutzung schnell und stark an, ki reduziert sich dabei deutlich ( Bauverkehr, Plasterdecken)
   Die mindestdicke frostsicherer Oberbau ab OK PFlaster ist u.a. abhängig vom Baugrund/Frostempfindlichkeitsklassen nach ZTV E Stb
   und den Frosteinwirkungszonen nach Karte RStO
c1) 120 MN/m²
c2) 100 MN/m²
c3) 45 MN/m²
c4) Deckschicht 8 cm
c5) Bettung 3-5 cm
c6) Tragschicht 15 cm
c7) min. Dicke frostsicherer Oberbau ≥27+18=45 cm
d1) 150 MN/m²
d2) 120 MN/m²
d3) 45 MN/m²
d4) Deckschicht 10 cm
d5) Bettung 3-5 cm
d6) Tragschicht 25 cm
d7) min. Dicke frostsicherer Oberbau ≥39+26=65 cm
e1) 180 MN/m²
e2) 120 MN/m²
e3) 45 MN/m²
e4) Deckschicht 10 cm
e5) Bettung 3-5 cm
e6) Tragschicht 25 cm
e7) min. Dicke frostsicherer Oberbau ≥39+26=65 cm
f1) 150 MN/m²
f2) 120 MN/m²
f3) 45 MN/m²
f4) Deckschicht 8 cm
f5) Bettung 3-5 cm
f6) Tragschicht 20 cm
f7) min. Dicke frostsicherer Oberbau ≥32+33=65 cm

## Patentansprüche

1. Entwässerungssystem (E‴) aufweisend einen Unterbau (U), eine Deckschicht (3) und einen Bausatz mit Betonelementen (BE), wobei der bodenseitig vorbereitete Unterbau (U) bestehend aus einer verfestigten Tragschicht (1) sowie einer darüber befindlichen Bettungsschicht (2) die eine obere Nutzfläche (N, N') bildende Deckschicht (3) trägt, die zumindest eine randseitige Stützstruktur (ST, ST') aus den Betonelementen (BE) als variabel profilierbare und dimensionierbare Bauteile (12, 13) aufweist, wobei die Betonelemente (BE) zumindest im Bereich ihrer der Tragschicht (1) und/oder der Bettungsschicht (2) zugeordneten Anlagezone (4, 4') mit einer zumindest bereichsweise wasserdurchlässigen Drainage-Betonlage (6) versehen sind, mit welcher der/den jeweiligen an der Drainage-Betonlage (6) anliegenden Schicht bzw. Schichten des Unterbaus (U) eine permanente Zwangsentwässerung mit horizontaler Querableitung (5) unterhalb der Deckschicht (3) vorgegeben oder vorgebbar ist, **dadurch gekennzeichnet, dass** in die wasserdurchlässige Stützstruktur (ST, ST') ein die Bauteile der oberen Decklage (3) untergreifender wasserdurchlässiger Fundamentfertigstein (30, 30') als Verlegeelement integriert wird.

2. Entwässerungssystem (E‴) nach Anspruch 1, **dadurch gekennzeichnet, dass** die Betonelemente (BE) vollständig aus einem offenporigen Material geformt sind.

3. Entwässerungssystem (E‴) nach Anspruch 1 oder 2, **dadurch gekennzeichnet, dass** die im Querschnitt mehrlagigen Betonelemente (BE) aus einem Grundmaterial (G) und zumindest einem haufwerkporigen Betongemisch geformt sind und dieses als eine Drainage-Betonlage (6) eine Grenzschicht im Bereich von vertikalen Anlagezonen (4, 4') an den Schichten (1, 2) des Unterbaus (U) definiert.

4. Entwässerungssystem (E‴) nach einem der Ansprüche 1 bis 3, **dadurch gekennzeichnet, dass** die Betonelemente (BE) mit der zumindest einen wasserdurchlässigen Betonlage als ein Bordstein, ein Rinnenstein, ein Randkantenstein, ein Rasengitterstein, ein L-Stein o. dgl. profiliertes Bauteil ausgeführt sind und mit diesen die Stützstruktur (ST, ST') einen modular ausführbaren Bausatz bilden.

5. Entwässerungssystem (E‴) nach einem der Ansprüche 1 bis 4, **dadurch gekennzeichnet, dass** der mit dem Entwässerungssystem (E, E') kombinierte Unterbau (U) im Bereich der Tragschicht (1) und/oder der Bettungsschicht (2) mit einer geringer als die Ausführungsnorm verfestigten Belastungsklasse gemäß den Richtlinien für die Standardisierung des Oberbaus von Verkehrsflächen hergestellt ist, sodass die auf der mit dem Entwässerungssystem (E, E') versehenen Nutzflächen (N, N') später auftretende Belastungen (F, F') eine definierte Nachverfestigung des Unterbaus (U) bewirken.

6. Entwässerungssystem (E‴) nach einem der Ansprüche 1 bis 5, **dadurch gekennzeichnet, dass** der Unterbau (U) im Bereich der Tragschicht (1) und der Bettungsschicht (2) mit einer Schotter-Feinsand-Kombination versehen ist, die im Zusammenwirken mit dem Entwässerungssystem (E, E') eine optimale Filterstabilität im Drainagebereich bewirkt.

7. Entwässerungssystem (E‴) nach einem der Ansprüche 1 bis 6, **dadurch gekennzeichnet, dass** mit den jeweiligen die profilierten Oberbauteile in Form von Bord-, Rand- oder Rinnensteinen (12, 13) untergreifenden wasserdurchlässigen Fundamentfertigsteinen (30, 30') Fahrbelastungen o. dgl. Beanspruchungen (F) durch eine gezielte Lastverteilung (LV) aufnehmbar sind und mit Bettungsdruck (BD) in den Bereich des Unterbaus (U) weitgehend ohne Verfestigungswirkung auf diesen eingeleitet werden.

8. Entwässerungssystem (E‴) nach Anspruch 7, **dadurch gekennzeichnet, dass** die Fundamentfertigsteine (30, 30') das jeweilige übergeordnete Bauteil zumindest bereichsweise einlagig untergreifen und dabei mit mehreren eine jeweilige wasserdurchlässige Horizontallage (L1, L2) definierenden Fundamentfertigsteinen (30, 30') ein mehrlagiges Drainagesystem gebildet ist.

9. Entwässerungssystem (E‴) nach Anspruch 7 oder 8, **dadurch gekennzeichnet, dass** die Bauteile (12, 13) unmittelbar auf dem wasserableitenden Fundamentfertigstein (30) aufgelegt sind, wobei zumindest eine Nut-Feder-Profilierung (NF) zur Querkraftstabilisierung vorgesehen ist.

10. Entwässerungssystem (E‴) nach einem der Ansprüche 7 bis 9, **dadurch gekennzeichnet, dass** die beiden Lagen (L1, L2) der Fundamentfertigsteine (30, 30') unmittelbar aufeinanderliegen oder dass zwischen dem oberen Bauteil (12, 13) und dem zumindest einen Fundamentfertigstein (30, 30') eine zumindest bereichsweise wasserdurchlässige Stützverbindungslage (SL) vorgesehen ist.

11. Entwässerungssystem (E‴) nach einem der Ansprüche 7 bis 10, **dadurch gekennzeichnet, dass** die Fundamentfertigsteine (30, 30') und/oder die Stützverbindungslage (SL) mit zumindest einer einen kraft- und/oder formschlüssigen Verbindungsaufbau für das zugeordnete Bauteil vorgebenden Profilierung (P, P', P", NF) versehen sind, sodass für den baustellseitigen Montageablauf ein kontrollierbarer Verbindungszustand zwangsweise vorgegeben ist.

12. Entwässerungssystem (E‴) nach Anspruch 11, **dadurch gekennzeichnet, dass** die Stützverbindungslage (SL) zumindest bereichsweise als eine Klebeschicht oder Mörtellage (ML) ausgeführt ist oder die Stützverbindungslage (SL') aus wasserdurchlässigem Ortbeton geformt ist und dieser nur einen Teilbereich (TB) der Breite (FB) des Fundamentfertigsteins (30, 30') überdeckt.

13. Entwässerungssystem (E‴) nach einem der Ansprüche 7 bis 12, **dadurch gekennzeichnet, dass** die Stützverbindungslage (SL, SL') eine sich trapezförmig nach oben verjüngende Querschnittsprofilform mit jeweiligen Anlageflanken (AF) für die Tragschicht (1) des Unterbaus (U) aufweist.

## Claims

1. Drainage system (E‴) comprising a substructure (U), a top layer (3) and a kit with concrete elements (BE), , wherein the substructure (U) prepared on the ground side consisting of a solidified supporting layer (1) and a bedding layer (2) located above it supports the top layer (3) forming an upper usable area (N, N'), which comprises at least an edge-side support structure (ST, ST') from the concrete elements (BE) as components (12, 13) that can be variably profiled and dimensioned, wherein the concrete elements (BE) at least in the region of their abutment zone (4,4') assigned to the supporting layer. (1) and/or to the the bedding layer (2) are provided with a drainage concrete layer (6) permeable to water at least in areas , where the respective layer(s) adjoining the drainage concrete layer (6) or layers of the substructure (U) are provided with or can be provided with a permanent forced drainage with horizontal transverse drainage (5) below the top layer (3), characterised in thata water-permeable prefabricated foundation brick (30, 30') underpinning the components of the upper deck layer (3) is integrated as a laying element in the water-permeable support structure (ST, ST').

2. Drainage system (E‴) according to claim 1, **characterised in that** the concrete elements (BE) are completely formed from an open-pore material.

3. Drainage system (E‴) according to claim 1 or 2, **characterised in that** the multi-layered concrete elements (BE) in the cross-section are formed from a base material (G) and at least one pile-porous concrete mixture and this defines, as a drainage concrete layer (6), a boundary layer in the region of vertical contact zones (4, 4') at the layers (1, 2) of the substructure (U).

4. Drainage system (E‴) according to any one of claims 1 to 3,
**characterised in that** the concrete elements (BE) with the at least one water-permeable concrete layer are designed as a curb, a channel stone, a kerb stone, a lawn paving block, an L-shaped stone, or a similar profiled component, and together with these, the support structure (ST, ST') forms a modularly executable construction kit.

5. Drainage system (E‴) according to any one of claims 1 to 4,
**characterised in that** the substructure (U) combined with the drainage system (E, E') in the area of the support layer (1) and/or the bedding layer (2) is manufactured having a load-bearing class lower than the implementation standard according to the guidelines for the standardisation of the superstructure of traffic areas, such that the subsequently occurring loads (F,F') on the usable areas **(N, N') provided with the drainage system (E, E')** result in a defined reinforcement of the substructure (U).

6. Drainage system (E‴) according to any one of claims 1 to 5, **characterised in that** the substructure (U) in the region of the support layer (1) and the bedding layer (2) is provided with a gravel-fine sand combination which, in interaction with the drainage system (E, E'), results in optimum filter stability in the drainage region.

7. Drainage system (E‴) according to any one of claims 1 to 6, **characterised in that**, with the respective water-permeable prefabricated foundation bricks (30, 30') underpinning the profiled upper components in the form of curbstones, edge stones or gutter stones (12, 13), driving loads or similar stresses (F) can be absorbed by means of a targeted load distribution (LV) and are introduced with bedding pressure (BD) into the region of the substructure (U) largely without having a solidifying effect on these.

8. Drainage system (E‴) according to claim 7, **characterised in that** the prefabricated foundation blocks (30, 30') undercut the respective superordinate component at least in certain areas in a single layer, thereby forming a multi-layer drainage system with several prefabricated foundation blocks (30, 30') that define respective water-permeable horizontal layers (L1, L2).

9. Drainage system (E‴) according to claim 7 or 8, **characterised in that** the components (12, 13) are placed directly on the water-dissipating prefabricated foundation block (30), wherein at least one tongue-and-groove profiling (NF) is provided for lateral force stabilisation.

10. Drainage system (E‴) according to any one of claims 7 to 9, **characterised in that** the two layers (L1, L2) of the prefabricated foundation blocks (30, 30') lie directly on top of each other or **in that** a support connection layer (SL) permeable to water at least in areas is provided between the upper component (12, 13) and the at least one prefabricated foundation block (30, 30').

11. Drainage system (E‴) according to any one of claims 7 to 10,
**characterised in that** the prefabricated foundation blocks (30, 30') and/or the support connection layer (SL) are provided with at least one profiling (P, P', P", NF) that forms a force-locking and/or positive-locking connection structure for the associated component, such that a controllable connection state is necessarily established for the on-site assembly process.

12. Drainage system (E‴) according to claim 11, **characterised in that** the support connection layer (SL) is designed at least in areas as an adhesive layer or mortar layer (ML) or the support connection layer (SL') is formed from water-permeable in-situ concrete and this covers only a partial area (TB) of the width (FB) of the prefabricated foundation block (30, 30').

13. Drainage system (E"') according to any one of claims 7 to 12, **characterised in that** the support connection layer (SL, SL') has a trapezoidal upwardly tapered cross-sectional profile shape with respective contact flanks (AF) for the support layer (1) of the substructure (U).

## Revendications

1. Système de drainage (E‴) présentant
une infrastructure (U), une couche de recouvrement (3) et
un kit avec des éléments en béton (BE), dans lequel l'infrastructure (U) préparée
côté sol constituée
d'une couche porteuse (1) consolidée ainsi que d'une couche d'assise (2) se trouvant par-dessus porte une couche de recouvrement (3) formant une surface utile supérieure (N, N'), qui présente au moins une structure de support (ST, ST') côté bord composée des éléments en béton (BE) sous forme d'éléments de construction (12, 13) pouvant être profilés et dimensionnés de façon variable,
dans lequel les éléments en béton (BE) sont pourvus, au moins dans la région de leur zone d'appui (4, 4') associée à la couche porteuse (1) et/ou à la couche d'assise (2), d'une couche de béton de drainage (6) perméable à l'eau au moins par endroits, avec
laquelle
un drainage forcé permanent avec une évacuation transversale horizontale (5) sous la couche de recouvrement (3) est prescrit ou peut être prescrit à la couche/aux couches respectives de l'infrastructure (U) s'appliquant sur la couche de béton de drainage (6), **caractérisé en ce qu'**un bloc préfabriqué de fondation (30, 30') perméable à l'eau s'engageant sous les éléments de construction de la couche de recouvrement (3) supérieure est intégré comme élément de pose dans la structure de support (ST, ST') perméable à l'eau.

2. Système de drainage (E‴) selon la revendication 1, **caractérisé en ce que** les éléments en béton (BE) sont entièrement formés d'un matériau à pores ouverts.

3. Système de drainage (E‴) selon la revendication 1 ou 2, **caractérisé en ce que** les éléments en béton (BE) à plusieurs couches en section transversale sont formés à partir d'un matériau de base (G) et d'au moins un mélange de béton à structure granulaire poreuse et celui-ci définit, en tant que couche de béton de drainage (6), une couche limite dans la région des zones d'appui (4, 4') verticales sur les couches (1, 2) de l'infrastructure (U).

4. Système de drainage (E‴) selon l'une quelconque des revendications 1 à 3, **caractérisé en ce que** les éléments en béton (BE) avec la au moins une couche de béton perméable à l'eau sont réalisés sous la forme d'un bord de trottoir, d'un caniveau, d'une bordure, d'une dalle à gazon, d'une pierre en L ou d'un élément de construction profilé similaire et forment avec ceux-ci la structure de support (ST, ST') un kit exécutable de façon modulaire.

5. Système de drainage (E‴) selon l'une quelconque des revendications 1 à 4, **caractérisé en ce que** l'infrastructure (U) combinée avec le système de drainage (E, E') est fabriquée dans la région de la couche porteuse (1) et/ou de la couche d'assise (2) avec une classe de charge consolidée inférieure à la norme d'exécution, conformément aux directives pour la standardisation du revêtement de surfaces de circulation, de sorte que les charges (F, F') apparaissant ultérieurement sur les surfaces utiles (N, N') pourvues du système de drainage (E, E') provoquent une consolidation définie ultérieurement de l'infrastructure (U).

6. Système de drainage (E‴) selon l'une quelconque des revendications 1 à 5, **caractérisé en ce que** l'infrastructure (U) est pourvue, dans la région de la couche porteuse (1) et de la couche d'assise (2), d'une combinaison de gravier et de sable fin qui, en coopération avec le système de drainage (E, E'), provoque une stabilité de filtration optimale dans la région de drainage.

7. Système de drainage (E‴) selon l'une quelconque des revendications 1 à 6, **caractérisé en ce qu'**avec les blocs préfabriqués de fondation (30, 30') perméables à l'eau s'engageant sous les éléments de construction supérieurs profilés respectifs sous forme de bords, de bordures ou de caniveaux (12, 13), les charges de circulation ou contraintes (F) similaires peuvent être absorbées par une répartition ciblée des charges (LV) et sont introduites avec une pression d'assise (BD) dans la région de l'infrastructure (U) en grande partie sans effet de consolidation sur celle-ci.

8. Système de drainage (E‴) selon la revendication 7, **caractérisé en ce que** les blocs préfabriqués de fondation (30, 30') s'engagent sous l'élément de construction supérieur respectif au moins par endroits en une seule couche et un système de drainage à plusieurs couches est ainsi formé avec plusieurs blocs préfabriqués de fondation (30, 30') définissant une position horizontale (L1, L2) respective perméable à l'eau.

9. Système de drainage (E‴)
selon la revendication 7 ou 8, **caractérisé en ce que** les éléments de construction (12, 13) sont posés directement sur le bloc de fondation préfabriqué (30) drainant l'eau, dans lequel au moins un profilage à rainure-languette (NF) est prévu pour la stabilisation en cisaillement.

10. Système de drainage (E‴) selon l'une quelconque des revendications 7 à 9, **caractérisé en ce que** les deux couches (L1, L2) des blocs préfabriqués de fondation (30, 30') sont directement superposées ou qu'une couche de liaison de support (SL) perméable à l'eau au moins par endroits est prévue entre l'élément de construction supérieur (12, 13) et le au moins un bloc préfabriqué de fondation (30, 30').

11. Système de drainage (E‴) selon l'une quelconque des revendications 7 à 10, **caractérisé en ce que** les blocs préfabriqués de fondation (30, 30') et/ou la couche de liaison de support (SL) sont pourvus d'au moins un profilage (P, P', P", NF) prédéfinissant une structure de liaison à force et/ou par complémentarité de formes pour l'élément de construction associé, de sorte qu'un état de liaison contrôlable est prédéfini de manière forcée pour le déroulement du montage côté chantier.

12. Système de drainage (E‴) selon la revendication 11, **caractérisé en ce que** la couche de liaison de support (SL) est réalisée au moins par endroits sous la forme d'une couche de colle ou couche de mortier (ML) ou la couche de liaison de support (SL') est formée de béton coulé sur place perméable à l'eau et celui-ci ne recouvre qu'une région partielle (TB) de la largeur (FB) du bloc préfabriqué de fondation (30, 30').

13. Système de drainage (E‴) selon l'une quelconque des revendications 7 à 12, **caractérisé en ce que** la couche de liaison de support (SL, SL') présente un profil transversal trapézoïdal se rétrécissant vers le haut avec des flancs d'appui (AF) respectifs pour la couche porteuse (1) de l'infrastructure (U).
